(19) **Europäisches Patentamt / European Patent Office / Office européen des brevets**

(11) **EP 4 775 833 A1**

(12) **EUROPEAN PATENT APPLICATION**
published in accordance with Art. 153(4) EPC

(43) Date of publication:
**15.07.2026 Bulletin 2026/29**

(21) Application number: **24862403.3**

(22) Date of filing: **06.06.2024**

(51) International Patent Classification (IPC):
**F03D 9/32** (2016.01)  **F03D 3/02** (2006.01)

(52) Cooperative Patent Classification (CPC):
**F03D 3/02; F03D 9/32**

(86) International application number:
**PCT/JP2024/020769**

(87) International publication number:
**WO 2025/052746 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146366**

(71) Applicant: **Nabtesco Corporation Tokyo 102-0093 (JP)**

(72) Inventor: **HASHIMOTO, Hiroaki Tokyo 102-0093 (JP)**

(74) Representative: **Grünecker Patent- und Rechtsanwälte PartG mbB Leopoldstraße 4 80802 München (DE)**

(54) **WIND FORCE PROPULSION DEVICE AND WIND FORCE PROPULSION SYSTEM**

(57) The wind propulsion device is installed on a movable body and configured to generate propulsive force by receiving wind. The wind propulsion device includes one or more assemblies, where the one or more assemblies each consists of: a rotor configured to rotate about a rotation axis extending in a predetermined direction; and a plurality of plate-shaped blades fixedly attached to the rotor. The plurality of blades are disposed such that virtual straight lines connecting respective opposite ends of the plurality of blades are parallel to each other.

[FIG. 1]

**Description**

TECHNICAL FIELD

Priority is claimed on Japanese Patent Application No. 2023-146366, filed on September 8, 2023, the content of which is incorporated herein by reference.

BACKGROUND ART

Patent Document 1 discloses a wind powered sailing ship equipped with vertical blades, which are rotatable around a vertical shaft and configured in the form of a windmill, and a propeller connected to the vertical shaft. The trailing edges of the vertical blades are connected to a wire extending from a shaft that is disposed eccentrically to the rotation axis of the leading edges of the vertical blades in a downwind direction. The vertical blades are configured to pivot freely around the rotation axis of their leading edges.

Citation List

Patent Document

Patent Document 1: Japanese Patent Application Publication No. Hei 6-199287

SUMMARY OF INVENTION

Technical Problem

For the above sailing ship, it is not possible to efficiently obtain propulsive force based on the Magnus effect.
The present invention is intended to overcome the above problem, and one object thereof is to provide a wind propulsion device and a wind propulsion system that are capable of efficiently obtaining propulsive force based on the Magnus effect. Solution to Problem
To overcome the above drawback, embodiments of the present invention are configured as follows.

(1) An aspect of the present invention provides a wind propulsion device installed on a movable body and configured to generate propulsive force by receiving wind. The wind propulsion device includes one or more assemblies, where the one or more assemblies each including : a rotor configured to rotate about a rotation axis extending in a predetermined direction; and a plurality of plate-shaped blades fixedly attached to the rotor. The plurality of blades are disposed such that virtual straight lines connecting respective opposite ends of the plurality of blades are parallel to each other.

According to the foregoing configuration, wind tends to flow into the center of rotation of the blades even if the solidity of the blades is increased to generate the Magnus effect. Therefore, the wind propulsion device can efficiently convert wind power into the rotational force of the blades. The wind propulsion device can thus efficiently obtain propulsive force based on the Magnus effect.
Here, the term "solidity" refers to the ratio of the actual blade area to the area of the circle formed by the rotation of the rotor.
(2) In the wind propulsion device described in (1) above, the plurality of blades may be disposed such that the respective opposite ends are located on a virtual circle centered on the rotation axis.
(3) In the wind propulsion device described in (1) or (2) above, the plurality of blades may be disposed such that, as viewed from the predetermined direction, the plurality of blades are line symmetrical with respect to a center line that passes through a center of rotation of the rotation axis and that is parallel to the virtual straight lines.
(4) In the wind propulsion device described in any of (1) to (3), the plurality of blades may be disposed such that, as viewed from the predetermined direction, the plurality of blades are line symmetrical with respect to a center line that passes through a center of rotation of the rotation axis and that is orthogonal to the virtual straight lines.
(5) In the wind propulsion device described in any of (1) to (4), a longest one of the plurality of blades may be sized such that a length of the virtual straight line is equal to or greater than half a diameter of a virtual circle centered on the rotation axis.
(6) In the wind propulsion device described in any of (1) to (5), the rotor may be a plate-shaped rotating plate, and the plurality of blades may be fixedly attached to one face of the rotating plate.
(7) In the wind propulsion device described in (6), the one or more assemblies may include a plurality of assemblies arranged next to each other in a direction along the rotation axis. If the wind propulsion device includes N assemblies and M is a natural number, the plurality of assemblies may be offset from one another by 180 x M/N degrees.

(8) The wind propulsion device described in (7) may include two units, and each unit may including the plurality of assemblies offset from one another by 180 x M/N degrees. The two units may be stacked such that the plurality of assemblies in one of the two units are stacked in a reverse order relative to the plurality of assemblies in another one of the two units in the predetermined direction.

(9) The wind propulsion device described in any of (1) to (8) may further include: a shaft portion extending along the rotation axis, the shaft portion being provided on the one or more assemblies; a cover connected to the shaft portion, the cover being configured to move upward and downward; and a drive unit configured to cause the cover to move to a non-operating position where the cover encloses the one or more assemblies and an operating position where the cover does not enclose the one or more assemblies.

(10) In the wind propulsion device described in (9), the cover may rotate integrally with the one or more assemblies.

(11) In the wind propulsion device described in any of (1) to (10), the plurality of blades may be twisted such that first virtual straight lines connecting respective opposite ends of the plurality of blades at a first position on the rotation axis intersect, as seen from the predetermined direction, second virtual straight lines connecting the respective opposite ends of the plurality of blades at a second position different from the first position on the rotation axis.

(12) An aspect of the present invention provides a wind propulsion system including a wind propulsion device and a wind power controller, the wind propulsion device being installed on a movable body and being configured to generate propulsive force by receiving wind, the wind power controller being configured to control the wind propulsion device. The wind propulsion system includes: an assembly including a plurality of plate-shaped blades, the plurality of blades being connected such that the plurality of blades are integrally rotatable around a rotation axis extending in a predetermined direction: and an electric motor configured to drive the rotary shaft. The wind power controller includes: a first obtaining unit configured to obtain a moving speed of the movable body; a second obtaining unit configured to obtain wind condition information including a current wind speed and a current wind direction in an area where the movable body is located; a calculation unit configured to calculate a relative wind direction relative to the wind propulsion device, based on the obtained moving speed of the movable body and the obtained wind condition information; and a rotation control unit configured to control the electric motor in accordance with the calculated relative wind direction to adjust a rotation speed of the assembly.

(13) In the wind propulsion system described in (12), the rotation control unit may adjust the propulsive force.

(14) In the wind propulsion system described in (13), induced drag may be adjusted by adjusting the propulsive force.

(15) In the wind propulsion system described in (13) or (14), electrical power may be generated simultaneously with adjusting the propulsive force. Advantageous Effects of Invention

According to the present invention, it is possible to efficiently obtain propulsive force based on the Magnus effect.

BRIEF DESCRIPTION OF DRAWINGS

[FIG. 1] A perspective view showing a wind propulsion system according to a first embodiment.
[FIG. 2] A diagram showing an example of functional configuration of the wind propulsion system according to the first embodiment.
[FIG. 3] A diagram showing an example of flow of energy and the like in the wind propulsion system, along with a comparative example.
[FIG. 4] A perspective view of an assembly in the wind propulsion device relating to the first embodiment.
[FIG. 5] Showing a flow velocity distribution for an eight-blade arrangement.
[FIG. 6] Illustrating propulsion for an eight-blade arrangement.
[FIG. 7] Following Fig. 6 to illustrate propulsion for an eight-blade arrangement.
[FIG. 8] Illustrating propulsive force for an eight-blade arrangement together with a comparative example.
[FIG. 9] Illustrating propulsive force in the case of eight-blade arrangement.
[FIG. 10] Showing the relationship between speed, propulsive force, and output for an eight-blade arrangement.
[FIG. 11] Illustrating propulsive force in a comparative example.
[FIG. 12] Showing the relationship between speed, propulsive force, and output in the comparative example.
[FIG. 13] Showing the flow velocity distribution in the case of two-blade arrangement.
[FIG. 14] Illustrating the characteristics of the two-blade arrangement.
[FIG. 15] Illustrating an example of how the two blades are arranged.
[FIG. 16] Showing as an example the relationship between propulsive forces.
[FIG. 17] Showing a first modification example of the blades.

[FIG. 18] Showing a second modification example of the blades.

[FIG. 19] Showing the air flow when there is rotation.

[FIG. 20] Showing an airfoil shape derived from a Joukowski transformation such that the airfoil has an inclination of 10 degrees to the air flow.

[FIG. 21] Illustrating the symmetry of the blades with respect to the direction of rotation.

[FIG. 22] A perspective view showing a wind propulsion system according to a second embodiment.

[FIG. 23] A perspective view as seen from above of the wind propulsion device of the second embodiment.

[FIG. 24] A perspective view as seen from below of the wind propulsion device of the second embodiment.

[FIG. 25] Showing an example of how the placement angles of the assemblies are related to the propulsive force in the second embodiment.

[FIG. 26] Showing a modification example of the wind propulsion device of the second embodiment.

[FIG. 27] A perspective view showing a wind propulsion system according to a third embodiment.

[FIG. 28] Showing an example of how the placement angles of the assemblies are related to an overturning moment in the third embodiment.

[FIG. 29] Showing an example of how the placement angles of the assemblies are related to an overturning moment in a comparative example.

[FIG. 30] A top perspective view as seen from a first position showing a plurality of blades in a wind propulsion device according to a fourth embodiment.

[FIG. 31] A top perspective view as seen from a second position showing a plurality of blades in the wind propulsion device according to the fourth embodiment.

[FIG. 32] Illustrating how the wind propulsion device of the fourth embodiment works.

[FIG. 33] Showing a modification example where the plurality of blades have a twisted shape.

[FIG. 34] A side view including a longitudinal section of a wind propulsion device of a fifth embodiment.

[FIG. 35] A view including a cross section of the wind propulsion device of the fifth embodiment.

[FIG. 36] A top view of the wind propulsion system of the fifth embodiment.

[FIG. 37] Showing an example of how the wind propulsion device of the fifth embodiment works.

[FIG. 38] Showing an example of how the wind propulsion device of the fifth embodiment works.

[FIG. 39] Showing another example of how the wind propulsion device of the fifth embodiment works.

[FIG. 40] Showing a modification example of the wind propulsion device of the fifth embodiment.

[FIG. 41] Showing an example of how the modification example of the wind propulsion device of the fifth embodiment works.

[FIG. 42] A diagram showing an example of how to control a brake force during a sailing mode in the wind propulsion system of a sixth embodiment.

[FIG. 43] Illustrating relative wind speed and other factors during headwinds.

[FIG. 44] Showing an example of the wind-direction force component and the orthogonal force component for an eight-blade arrangement.

[FIG. 45] Showing an example of the relationship between relative wind direction and optimum lift coefficient.

[FIG. 46] Showing an example of the relationship between rotational speed, propulsive force, and generated electrical energy.

[FIG. 47] Showing an example of the relationship between lift constant and lift-to-drag ratio.

[FIG. 48] Showing an example of the relationship between speed per hour, propulsive force, and output.

[FIG. 49] A perspective view of a first modification example of the movable body.

[FIG. 50] A perspective view of a second modification example of the movable body.

[FIG. 51] A perspective view of a third modification example of the movable body.

[FIG. 52] A perspective view of a fourth modification example of the movable body.

[FIG. 53] Illustrating an example of the application of the wind propulsion system, where a rotor sail is installed in a ship to generate electrical power.

[FIG. 54] Showing a modification example of the wind power generation system.

[FIG. 55] Showing an example of the relationship between rotational speed, propulsive force, and generated electrical energy for a wind speed of 10 m/s.

[FIG. 56] Showing an example of the relationship between ship speed, energy and propulsive force for a wind speed of 13 m/s.

## DESCRIPTION OF EMBODIMENTS

Embodiments of a wind propulsion device and a wind propulsion system according to the present invention will now be described with reference to the accompanying drawings. In the following description, terms such as "parallel," "orthogonal," "center" and "coaxial" describe relative or absolute positions. These terms not only strictly mean such positions but also allow some tolerances and relative differences in angle and distance as long as the same effects can be still produced. In the drawings used for the following description, members are shown to different scales into recognizable sizes.

<Wind Propulsion System>

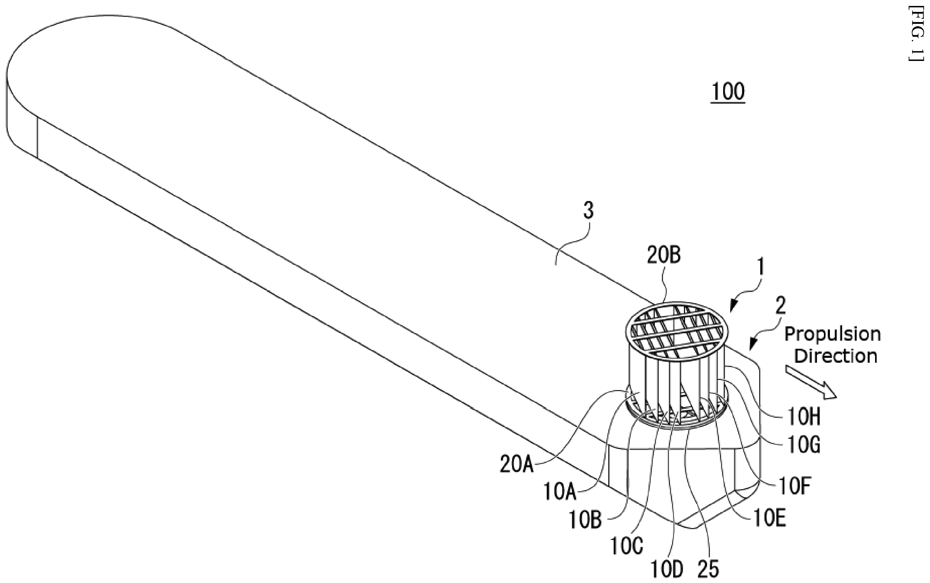

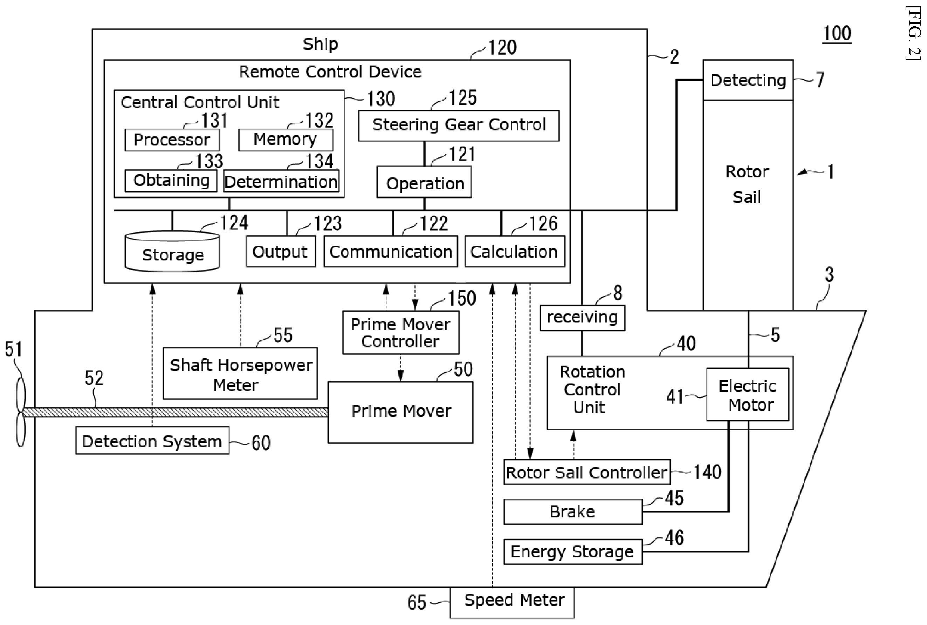

Fig. 1 is a perspective view showing a wind propulsion system 100 according to a first embodiment. Fig. 2 is a diagram showing an example of functional configuration of the wind propulsion system 100 according to the first embodiment.

Referring to Figs. 1 and 2 together, the wind propulsion system 100 includes: a wind propulsion device 1, which is installed on a ship 2 (an example of a movable body) to generate propulsive force by receiving wind; and a rotor sail controller 140 (an example of a wind power controller) for controlling the wind propulsion device 1. The wind propulsion system 100 includes: an assembly 4 consisting of a plurality of plate-shaped blades 10A-10H that are connected together such that they are integrally rotatable around a rotation axis extending in the vertical direction (an example of a predetermined direction) from a hull 3, and an electric motor 41 that is configured to drive the rotation axis. The wind power controller 140 includes: a speed meter 65 (an example of a first obtaining unit) that is configured to obtain the speed of the ship 2, a detecting unit 7 (an example of a second obtaining unit) that is configured to obtain wind condition information including the current wind speed and direction in the area where the ship 2 is located; a calculating unit 126 that is configured to calculate the relative wind direction relative to the wind propulsion device 1 based on the obtained speed of the ship 2 and the obtained wind condition information; and a rotation control unit 40 that is configured to control the electric motor 41 according to the calculated relative wind direction to adjust the rotational speed of the assembly 4. The wind propulsion device 1, which is included in the wind propulsion system 100, serves as a rotor sail that propels the ship 2 by generating a lift when receiving the wind.

The wind propulsion system 100 includes: the above-mentioned wind propulsion device 1 having the blades 10A-10H, the detecting unit 7, a receiving unit 8, and the rotation control unit 40; a remote control device 120 having an operation unit 121 that can be operated to control the propulsion speed of the ship 2, and a determination unit 134 that is configured to determine a target thrust of the wind propulsion device 1 and a target thrust of a propeller 51 that can be driven by a prime mover 50 attached to the ship 2 in accordance with an operation position of the operation unit 121; the rotor sail controller 140 that is configured to control the rotational speed of the blades 10A-10H rotating around the rotation axis in accordance with the target thrust of the wind propulsion device 1; and a prime mover controller 150 that is configured to control the rotational speed of the prime mover 50 in accordance with the target thrust of the propeller 51. The wind propulsion system 100 constitutes a system (ship integrated propulsion system) that performs integrated control of two types of propulsion: propulsion by the wind propulsion device 1 and propulsion by the propeller 51 driven by the prime mover 50.

The ship 2 includes: the remote control device 120; the prime mover 50; a shaft 52; the propeller 51; a shaft horsepower meter 55; a detection system 60; the speed meter 65; and the prime mover controller 150. Note that the ship 2 is not necessarily a ship operated by a crew. For example, the ship 2 may be a ship capable of autonomous navigation.

The remote control device 120 executes a program (hereinafter referred to as a "ship control program") that controls the operation of the ship 2. The remote control device 120 functions, by executing the ship control program, as a device that includes a central control unit 130, the operation unit 121, a communication unit 122, an output unit 123, the calculating unit 126, and a storage unit 124. The remote control device 120 includes the central control unit 130 that controls operations of the respective functional units of the remote control device 120.

The central control unit 130 includes, for example, a memory 132 and a processor 131 such as a CPU (Central Processing Unit) that are connected to each other via a bus. The processor 131 reads the ship control program stored in the storage unit 124 and stores the read ship control program in the memory 132. The processor 131 executes the ship control program stored in the memory 132.

The central control unit 130 communicates with the prime mover controller 150 by controlling the operation of the communication unit 122, for example. The central control unit 130 obtains information inputted via the operation unit 121, for example. The central control unit 130 records information generated by the execution of the ship control program in the storage unit 124, for example. The central control unit 130 obtains, for example, the rotational speed of the prime mover 50. The central control unit 130 outputs, for example, the obtained rotational speed to the prime mover controller 150. In the following description, an actual value of the rotational speed of the prime mover 50 obtained (determined) by the central control unit 130 is also referred to as "the actual rotational speed."

The operation unit 121 is a steering handle used to control the speed and traveling direction of the ship 2. The operation unit 121 receives input from the crew. The crew inputs a target rotational speed and/or a rotational direction of the engine into the remote control device 120 by operating the operation unit 121. The target rotational speed is a target rotational speed of the prime mover 50. The rotational direction of the engine is the rotational direction of the prime mover 50. The rotational direction of the prime mover 50 is either forward or reverse. The traveling direction of the ship 2 with the prime mover 50 rotating in the forward direction is opposite to the traveling direction of the ship 2 with the prime mover 50 rotating in the reverse direction.

The operation unit 121 outputs to the central control unit 130 the target rotational speed indicated by the result of the crew's operation. The operation unit 121 outputs information indicating the engine rotational direction indicated by the result of the crew's operation (hereinafter referred to as "the rotational direction information") to the central control unit 130. Note that the operation unit 121 does not necessarily need to be operated by the crew. For example, when the ship 2 operates autonomously, the operation unit 121 may be operated by the central control unit 130 in accordance with the ship control program.

The communication unit 122 includes a communication interface for connecting the remote control device 120 to the shaft horsepower meter 55, the detection system 60, the speed meter 65, and the prime mover controller 150. The communication unit 122 communicates with the shaft horsepower meter 55, the detection system 60, the speed meter 65, and the prime mover controller 150 via either wired or wireless communication. The communication unit 122 transmits, for example, the target rotational speed, the actual rotational speed, and the rotational direction information to the prime mover controller 150.

The output unit 123 includes output devices such as display devices including CRT (Cathode Ray Tube) displays, liquid crystal displays, and organic EL (ElectroLuminescence) displays, as well as audio output devices such as speakers. The output unit 123 may be configured as an interface for connecting these output devices to the device in which the output unit is included. The output unit 123 outputs information related to the remote control device 120. The output unit 123 outputs, for example, results of operations performed via the operation unit 121.

The calculation unit 126 includes a processor such as a CPU (Central Processing Unit) (an example of a processing unit) connected to the bus. The calculation unit 126 calculates various types of information related to the remote control device 120. The calculation unit 126 calculates, for example, the relative wind direction relative to the wind propulsion device 1 based on the obtained speed of the ship 2 and wind condition information.

The storage unit 124 is formed of storage devices such as magnetic hard disk devices and semiconductor storage devices. The storage unit 124 stores various types of information related to the remote control device 120. The storage unit 124 stores, for example, the ship control program in advance. The storage unit 124 stores information generated by execution of the ship control program, for example. The storage unit 124 stores, for example, a history of operations performed by the crew through the operation unit 121. The storage unit 124 stores, for example, a history of the actual rotational speed of the prime mover 50.

The prime mover 50 is an engine that generates propulsive force for the ship 2. The prime mover 50 converts the energy contained in fuel into motive power. Any types of fuel and operating mechanism can be used provided that the prime mover 50 is able to convert the energy contained in fuel into the motive power. The prime mover 50 is, for example, a two-stroke diesel engine. Alternatively, the prime mover 50 may be, for example, a four-stroke diesel engine or a gas engine. For the sake of explanatory convenience, an example of the ship 2 in which the prime mover 50 is a two-stroke engine will be described.

The shaft 52 is rotated by the motive power produced by the prime mover 50. The rotational speed of the shaft 52 is proportional to the rotational speed of the prime mover 50. By rotating, the shaft 52 transmits the motive power produced by the prime mover 50 to the propeller 51.

The propeller 51 is rotated by the motive power produced by the prime mover 50. By rotating, the propeller 51 produces the propulsive force that moves the ship 2.

The shaft horsepower meter 55 measures the motive power produced by the prime mover 50. The shaft horsepower meter 55 measures the motive power produced by the prime mover 50 by, for example, detecting a torsional strain produced in the shaft 52 electrically or optically or both.

The detection system 60 includes a sensor that detects the rotational speed of the prime mover 50. The detection system may include, for example, a proximity sensor. The proximity sensor may be configured to output an on-signal when metal is situated within a certain distance and an off-signal when metal is not situated within the certain distance. In this case, the proximity sensor outputs an on-signal when, for example, a convex portion provided on the surface of the shaft 52 is situated within a detection range and an off-signal when a concave portion provided in the surface of the shaft 52 is situated within the detection range. The detection system 60 may detect the rotational speed of the prime mover 50 based on such changes in the output of the proximity sensor and the information obtained in advance indicating the interval between the concave portion and convex portion of the shaft 52.

The detection system 60 may include other types of devices, in place of the proximity sensor. For example, the detection system 60 may include an encoder, a sensor that detects engine sound, or a sensor that detects engine vibration.

The speed meter 65 measures the speed of the ship 2. The speed meter 65 uses, for example, the Doppler effect for measuring the speed of the ship. The ship speed measured by the speed meter 65 is specifically the ship's speed through water.

The prime mover controller 150 controls the operation of the prime mover 50. The prime mover controller 150 determines the amount of the fuel to be injected and the timing of the fuel injection based on the actual rotational speed obtained by the determination unit 134. The prime mover controller 150 controls the operation of the prime mover 50 such that the determined amount of fuel is injected at the determined timing. The prime mover controller 150 controls the operation of the prime mover 50 by executing a fuel feed calculation process, fuel feed control process, and rotational direction control process.

In the fuel feed calculation process, the amount of fuel to be fed to the prime mover 50 (hereinafter also referred to as "fuel feed") is calculated based on the target rotational speed and the actual rotational speed, using a predetermined fuel feed calculation function. The fuel feed calculation function is a function that uses the target rotational speed and the actual rotational speed as the explanatory variable, and the fuel feed as the response variable. The prime mover controller 150 calculates the fuel feed by executing the fuel feed calculation process.

In the fuel feed control process, the degree of opening and closing of the valve attached to the fuel feed pipe is controlled such that the fuel feed calculated by the fuel feed calculation process is accomplished in the prime mover 50. The fuel feed pipe is a pipe connecting the prime mover 50 and an unshown fuel tank, through which the fuel flows from the fuel tank to the prime mover 50. The prime mover controller 150 feeds the fuel from the fuel tank to the prime mover 50 by executing the fuel feed control process.

In the rotational direction control process, the rotational direction of the prime mover 50 is controlled to the rotational direction of the engine. The rotational direction control process is, for example, a process of switching the rotational direction of the prime mover 50 between forward and reverse by operating the clutch of the prime mover 50. The prime mover controller 150 controls the rotational direction of the prime mover 50 to the rotational direction of the engine by executing the rotational direction control process.

The direction of the torque outputted by the prime mover 50 is in accordance with the rotational direction of the prime mover 50. Therefore, the direction of the torque occurring when the rotational direction of the prime mover 50 is forward is opposite to the direction of the torque occurring when the rotational direction of the prime mover 50 is reverse. The motive power produced by the prime mover 50 is equal to the value obtained by multiplying the magnitude of the torque outputted from the prime mover 50 by the rotational speed of the prime mover 50.

The central control unit 130 is further provided with an obtaining unit 133 and the determination unit 134.

The obtaining unit 133 obtains the results of detections performed by the detection system 60 via the communication unit 122. The determination unit 134 obtains the motive power measured by the shaft horsepower meter 55 via the communication unit 122. The obtaining unit 133 obtains the ship speed measured by the speed meter 65 via the communication unit 122. The obtaining unit 133 obtains the fuel feed calculated by the prime mover controller 150 via the communication unit 122. The obtaining unit 133 obtains the target rotational speed and the rotational direction information outputted by the operation unit 121 via the communication unit 122.

The determination unit 134 executes a rotational speed determination process. The rotational speed determination process determines one of the values of the rotational speed obtained by the detection system 60 as the actual rotational speed of the prime mover 50, based on at least one of the target rotational speed, state information, which is information about the state of the prime mover 50, or the speed of the ship 2. Examples of the possible actual rotational speed include a first rotational speed and a second rotational speed. The state information includes, for example, the fuel feed. The state information includes, for example, the motive power measured by the shaft horsepower meter 55.

The central control unit 130 outputs the actual rotational speed determined by the determination unit 134 to the prime mover controller 150 via the communication unit 122. The central control unit 130 outputs the rotational direction information to the prime mover controller 150 via the communication unit 122. The central control unit 130 outputs the target rotational speed to the prime mover controller 150 via the communication unit 122. The central control unit 130 controls the operation of the output unit 123 and causes the output unit 123 to output information.

<Flow of Energy in Wind Propulsion System>

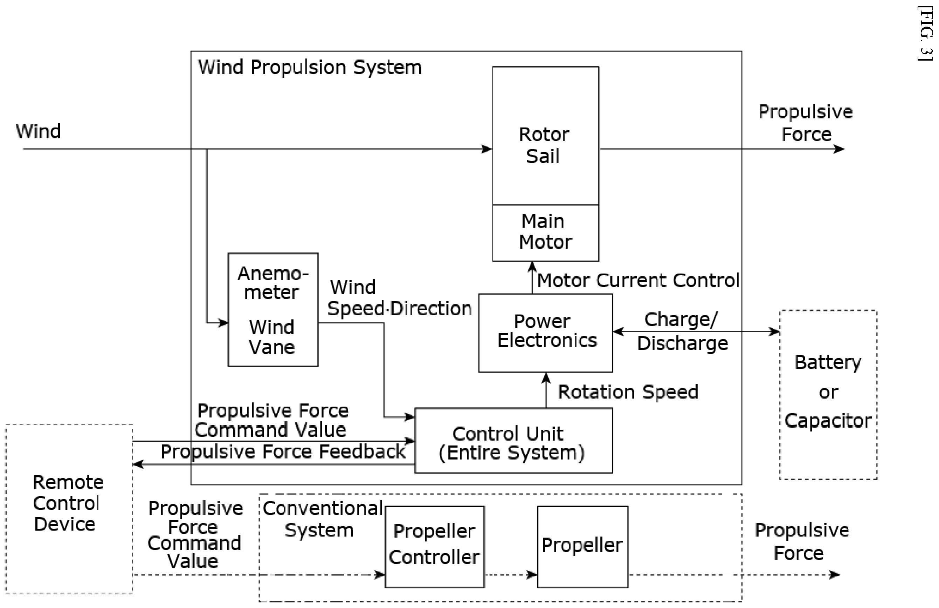

Fig. 3 is a diagram showing an example of flow of energy and the like in the wind propulsion system 100, along with a comparative example. In Fig. 3, the flow of physical objects, the flow of information, and the electrical flow (an example of a flow of energy and the like) are indicated by various arrows.

As shown in Fig. 3, in the comparative example (conventional system), the force of the wind is once converted to rotational force to turn the propeller. Therefore, in the comparative example, the force conversion results in a reduction of propulsion efficiency.

In contrast, the wind propulsion system 100 of the embodiment has the rotor sail regarded as a propeller and uses directly, as a propulsive force, the lift (Magnus force) generated by the rotor sail rotating with the force of the wind. In other words, the wind propulsion system 100 of the embodiment uses the wind directly as a propulsive force. Therefore, the wind propulsion system 100 of the embodiment provides an improved propulsion efficiency compared to the comparative example.

Thus, in the wind propulsion system 100 of the embodiment, the wind is received by the rotor sail and converted into a propulsive force. For example, just as a sailing ship receives the wind in its sails and converts it into a propulsive force, a rotor sail ship converts the wind directly into a propulsive force with its rotor sail. The wind propulsion system 100 of the embodiment is characterized by converting the wind into a propulsive force as a sailing ship. In the wind propulsion system 100 of the embodiment, the performance of the rotor sail as a sail is superior to that of a conventional rigid-wing sail.

<Wind Propulsion Device>

Referring to Figs. 1 and 2 together, the wind propulsion device 1 serves as a rotor sail which is installed on the ship 2 to generate propulsive force by receiving wind. In the illustrated example, a single wind propulsion device 1 is installed on the front part (bow) of the hull 3. The installation configuration (installation location, number of devices, etc.) of the wind propulsion device 1 is not limited to the above and can be modified in accordance with the design specifications.

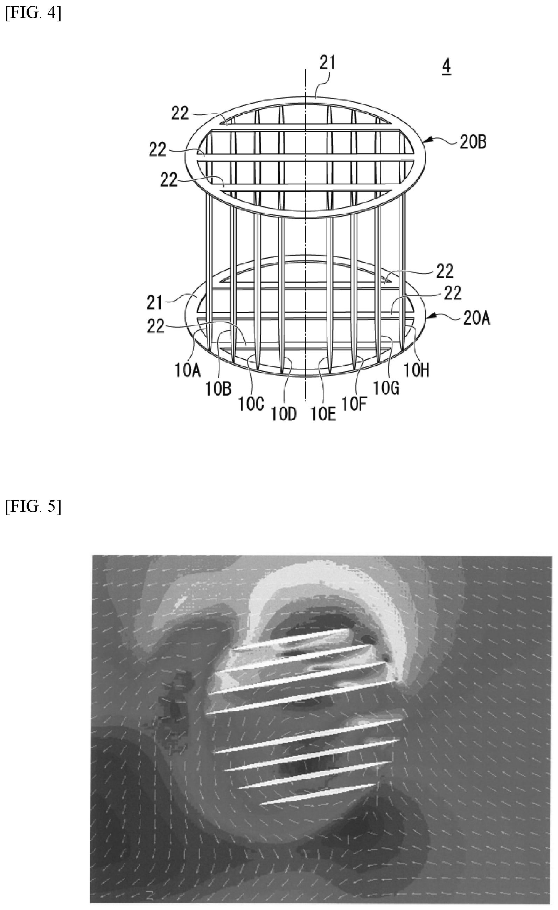

Fig. 4 is a perspective view of an assembly 4 in the wind propulsion device relating to the first embodiment.

Referring also to Fig. 4, the wind propulsion device 1 includes the assembly 4 constituted by rotors 20A and 20B that are rotatable around a rotation axis extending in the vertical direction from the hull 3 (the dash-dot line shown in Fig. 4) and a plurality of plate-shaped blades 10A to 10H that are each fixedly attached to the rotors 20A and 20B. The plurality of blades 10A to 10H are arranged such that the virtual straight lines connecting their respective opposite ends are parallel. The plurality of blades 10A to 10H are disposed such that their respective opposite ends are located on a virtual circle centered on the rotation axis. The longest (innermost) one of the plurality of blades 10A to 10H is sized such that the length of the virtual straight line (the length from one end of the blade to the other, or what is called a chord length) is at least 1/2 the diameter of the virtual circle centered on the rotation axis. The outermost one of the plurality of blades 10A to 10H may have a chord length less than 1/2 the diameter of the virtual circle centered on the rotation axis. Note that the chord lengths of the plurality of blades are not limited to the above and may be modified in accordance with the design specifications.

In the illustrated example, the virtual circle centered on the rotation axis is a perfect circle as viewed from the vertical direction. Note that the shape of the virtual circle as viewed from the vertical direction is not limited to the above, but may also be elliptical, oblong, quadrangular, or a closed ring formed by connecting curves.

The rotators 20A and 20B are plate-shaped rotating plates 20A and 20B. The plurality of blades 10A to 10H are each fixed to one face of the rotating plate 20A and to one face of the rotating plate 20B. In the illustrated example, the rotating plates 20A and 20B include a lower plate 20A, to which the lower ends of the plurality of blades 10A to 10H are fixed, and an upper plate 20B, to which the upper ends of the plurality of blades 10A to 10H are fixed. For example, the lower plate 20A is rotatably connected to a support plate 25 on the hull 3 via bearings (not shown).

The rotating plates 20A and 20B each have a frame 21 having an annular shape and a plurality of beams 22 connected at both ends thereof to the inner circumference of the frame 21 and parallel to each other. In the illustrated example, three beams 22 are connected at both ends thereof to the inner circumference of the frame 21 and are equally spaced. Note that the configuration (number and arrangement, etc.) of the beams 22 is not limited to the above and can be modified in accordance with the design specifications. For example, the rotators 20A and 20B may be configured (e.g. shaped) as a solid disk (an example of a rotating plate) or a hollow disk. The configuration of the rotators 20A and 20B is not limited to the above and can be modified in accordance with the design specifications.

In the example shown, the assembly 4 has a single stage; however, this embodiment is not limited thereto, and the number of stages of the assembly 4 can be modified in accordance with the design specifications. For example, if assemblies 4A and 4B are provided, the assemblies 4A and 4B may share common rotators 20A and 20B. The installation configuration of the rotators 20A and 20B with respect to a plurality of assemblies 4 may be varied in accordance with the design specifications. Furthermore, the assemblies 4A and 4B may have the same shape, and the rotators 20A and 20B may be bolted or welded.

The plurality of blades 10A to 10H are blades 10A to 10H extending in the vertical direction. As viewed from the vertical direction, the plurality of blades 10A to 10H are disposed so as to be line symmetrical with respect to a center line that passes through the rotation center of the rotation axis and is parallel to the virtual straight lines. As viewed from the vertical direction, the plurality of blades 10A to 10H are disposed so as to be line symmetrical with respect to a center line passing through the rotation center of the rotation axis and is orthogonal to the virtual straight lines.

In the illustrated example, the eight blades 10A to 10H extend vertically to intersect the respective three beams 22 of the rotating plates 20 and 20B. In the illustrated example, of the eight blades 10A to 10H, the four blades 10A to 10D on one side of the rotation center are equally spaced, and the four blades 10E to 10H on the other side are equally spaced. Note that the configuration of the blades 10A to 10H (number and arrangement, etc.) is not limited to the above and may be changed depending on the design specifications.

<Propulsion with Eight-Blade Arrangement>

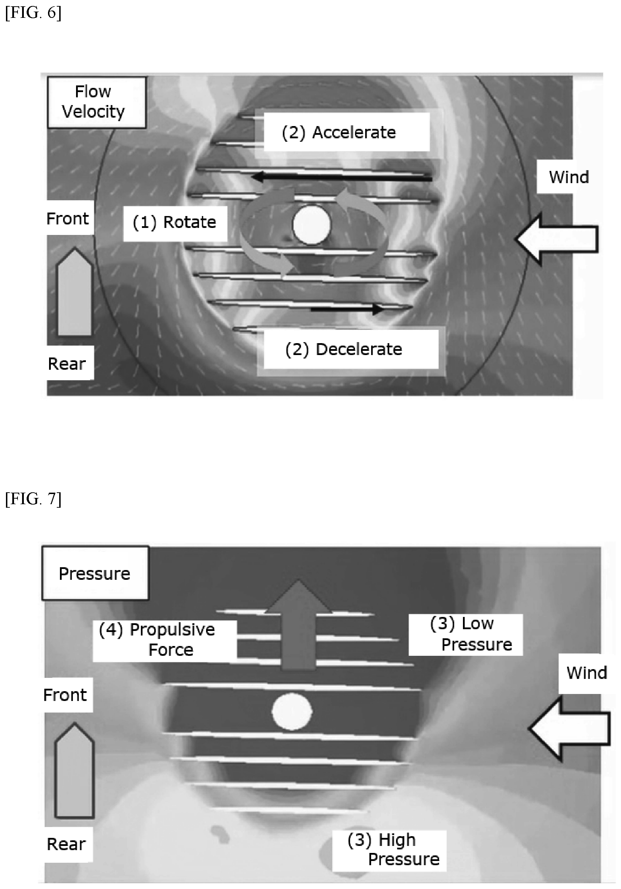

Fig. 5 shows the flow velocity distribution in an eight-blade arrangement. Fig. 6 illustrates propulsion in the eight-blade arrangement. Fig. 7 follows Fig. 6 to illustrate propulsion in the eight-blade arrangement. In the illustrated example, a pillar is shown at the rotation center of the rotation axis, but this pillar may not be necessarily provided.

Referring to Figs. 5 to 7 together, the eight blades rotate regardless of wind direction. In the eight-blade arrangement, the portion in front of the rotation center is aligned with the rotational direction, and thus the wind on the front side is accelerated and the wind on the rear side is decelerated. Then, based on Bernoulli's theorem, the pressure on the front side decreases, and the pressure on the rear side increases. This pressure difference generates a propulsive force orthogonal to the wind direction. This propulsive force is called the Magnus force. When the wind direction is opposite, the rotational direction is reversed. Strictly speaking, the Magnus force is a force generated by the rotation of a cylinder or a sphere, but because the mechanism of force generation is similar, the propulsive force generated by parallel blades is also referred to as the Magnus force. The Magnus force is also called lift because it acts in a direction orthogonal to the wind.

In this embodiment, the eight blades are disposed such that their respective opposite ends are located on a virtual circle centered on the rotation axis, and the virtual straight lines connecting their respective opposite ends are parallel. This allows for a larger propulsive force to be generated than in the case of seven or fewer blades. The propulsive force generally tends to increase as the number of blades is larger, although it is influenced by the Reynolds number, namely, factors such as size and wind speed. For example, the plurality of blades may include 18 blades.

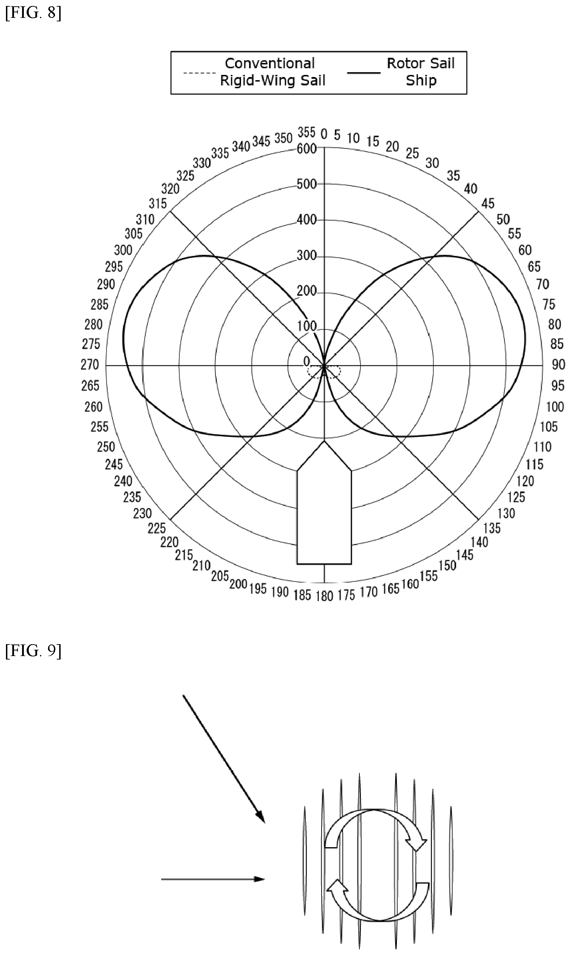

Fig. 8 illustrates the propulsive force for the eight-blade arrangement, together with a comparative example. Fig. 8 shows a forward propulsive force at a wind speed of 10 m/s and a ship speed of 15 knots. The comparative example corresponds to a sail that uses an extendable rigid-wing sail to convert wind energy into propulsive force (a general rigid-wing sail).

Referring to Fig. 8, the wind propulsion system 100 with eight blades relating to the present embodiment can provide several times more propulsive force than the general rigid-wing sail relating to the comparative example. The present embodiment can thus lower the dependence on the fossil fuels, thereby contributing to reduction of greenhouse gas emissions and fuel consumption.

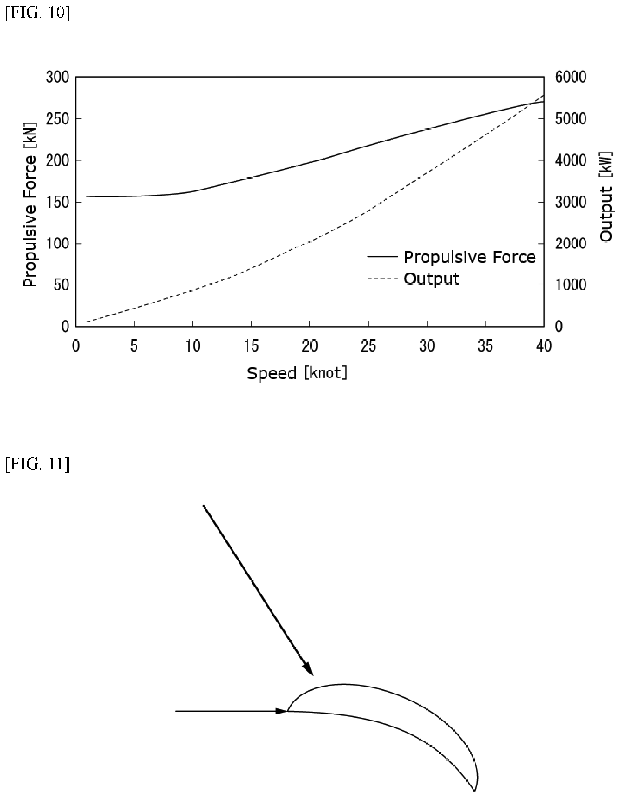

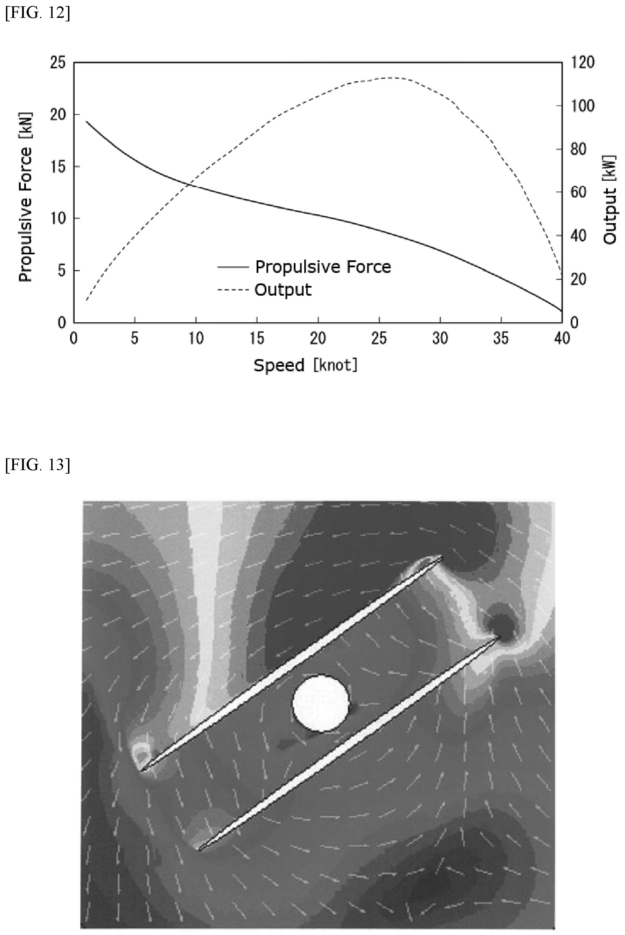

Fig. 9 illustrates the propulsive force in the eight-blade arrangement. Fig. 10 shows the relationship between speed, propulsive force, and output for the eight-blade arrangement. Fig. 11 illustrates the propulsive force of the comparative example. Fig. 12 shows the relationship between speed, propulsive force and output (= propulsive force x speed) in the comparative example. The comparative example corresponds to a general rigid-wing sail.

Referring to Figs. 9 and 10 together, in the eight-blade arrangement, as the ship's speed increases, the relative wind acting on the ship becomes stronger, and the rotational speed of the blades increases, which results in more effectively accelerating and decelerating the wind on the front and read sides. Therefore, the propulsive force (magnus force) and output are increased.

Referring to Figs. 11 and 12 together, in the case of the general rigid-wing sail relating to the comparative example, as the ship's speed increases, the headwind increases and the drag increases. Therefore, the propulsive force is reduced and the output is also reduced above a certain speed.

The wind propulsion system 100 with the eight-blade arrangement relating to the present embodiment can achieve improved propulsive force and output because the rotational speed of the blades increases even in headwinds, compared to the general rigid-wing sail relating to the comparative example.

<Two-Blade Arrangement>

Fig. 13 shows the flow velocity distribution in a two-blade arrangement. In the illustrated example, a pillar is shown at the rotation center of the rotation axis, but this pillar may not be necessarily provided.

Referring to Fig. 13, in the two-blade arrangement, large blades may face each other. For example, if the areas occupied by the two blades (the areas through which the blades pass) are equal, the two blades may be placed as close together as possible and have a large area. This allows for a greater propulsive force generated in the case of natural wind-driven rotation.

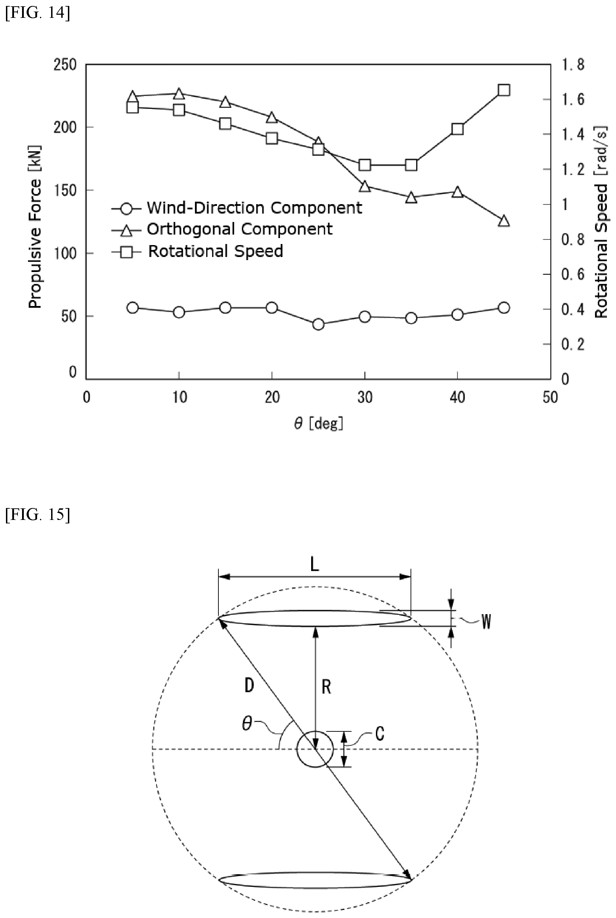

Fig. 14 illustrates the characteristics of the two-blade arrangement. Fig. 15 illustrates an example of how the two blades are arranged. In the illustrated example, a pillar is shown at the rotation center of the rotation axis, but this pillar may not be necessarily provided. In Fig. 15, L indicates the length of the blades (the maximum longitudinal length of the blades when viewed vertically), W indicates the width of the blades (the maximum transverse length of the blades when viewed vertically), C indicates the diameter of the pillar, R indicates the distance between the center of rotation and the inner surface of the blades, D indicates the distance between the end of one of the two blades and the end of the other blade (the end on the opposite side) (the length of the line segment passing through the center of rotation and connecting the end of one of the two blades and the end of the other blade), and θ indicates the angle between D and the center line (the center line passing through the center of rotation of the rotation axis and parallel to the virtual straight lines).

For example, the two blades may be arranged such that the two-blade arrangement can accomplish optimal characteristics. For example, the length L of the blades, the width W of the blades, the distance R, and the angle θ may be changed for optimizing the characteristics. For example, the diameter C of the pillar and the end-to-end distance D may be fixed values. The parameters L, W, C, R, D, and θ may be set in any other manners than the above according to the design specifications.

<Relationship between Propulsive Forces>

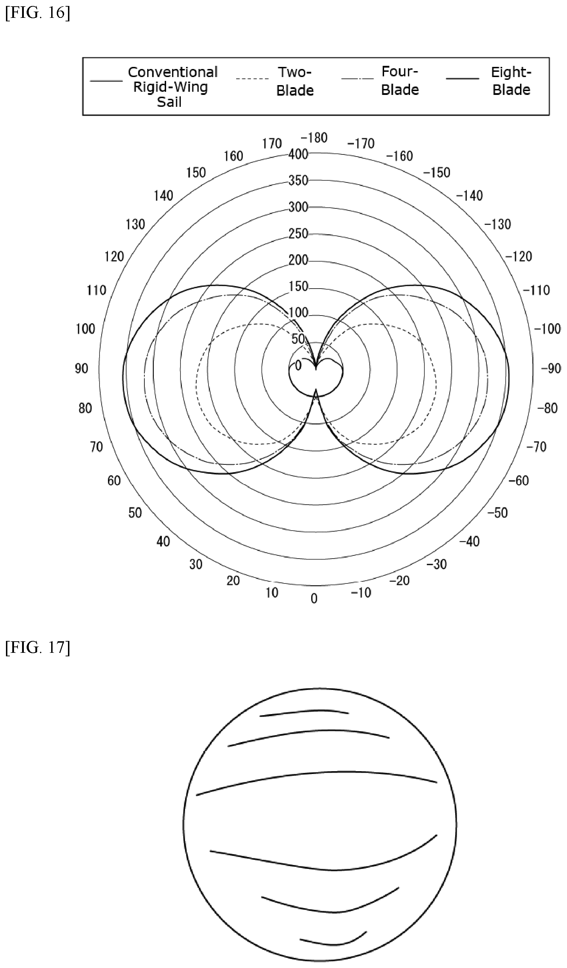

Fig. 16 shows as an example the relationship between propulsive forces. In Fig. 16, a conventional rigid-wing sail, which is a comparative example, is shown by the thin line, while two-blade, four-blade, and eight-blade arrangements, which are examples of the present embodiment, are shown by the dashed, dash-dot and thick lines, respectively.

Referring to Fig. 16, the wind propulsion system 100 of the present embodiment can provide greater propulsive force than the general rigid-wing sail relating to the comparative example, whether it has the two-, four- or eight-blade arrangement.

< Modification Examples of Blades>

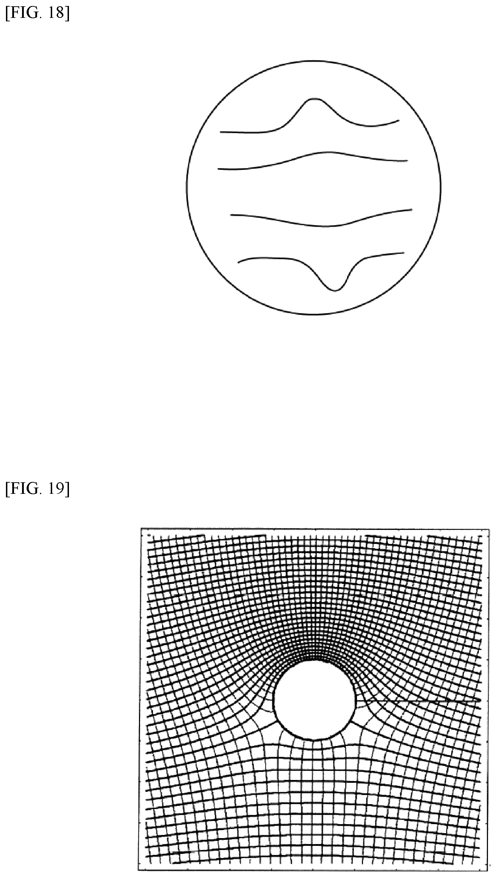

Fig. 17 shows a first modification example of the blades. Fig. 18 shows a second modification example of the blades. Referring to Figs. 17 and 18 together, the blades are not limited to being shaped like a flat plate, but can also be shaped (curved) to follow the air flow. The example in Fig. 17 shows six blades, each with an outwardly curved shape when viewed vertically. The example in Fig. 18 shows four blades, each with an outwardly curved shape when viewed vertically (the two outer blades have a mountainous curved shape in the center).

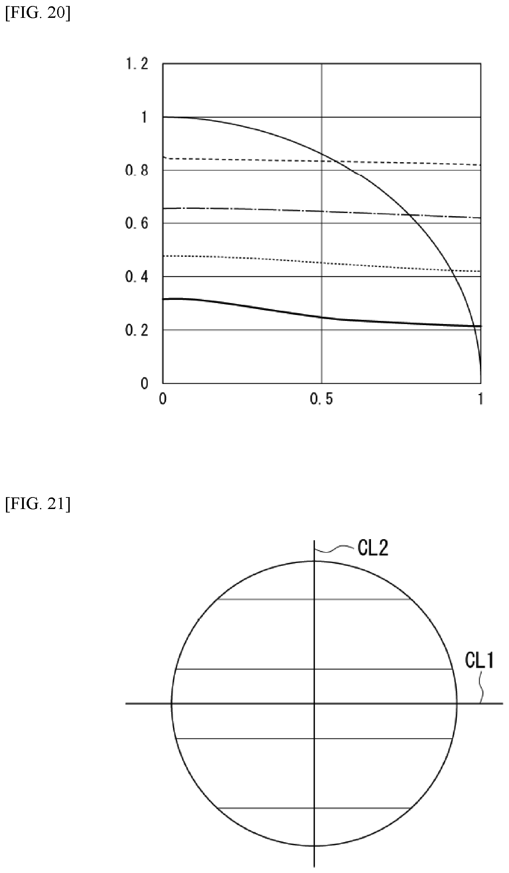

Fig. 19 shows the air flow when there is rotation. Fig. 20 shows an airfoil shape derived from a Joukowski transformation such that the airfoil has an inclination of 10 degrees to the air flow.

In the illustrated examples, the blades are shaped such that they follow the streamlines (wind flow) when wind (at an arbitrary speed) blows on a cylinder of 0.2 m radius. Although the way the wind flows changes when the cylinder rotates, the calculation is based on the assumption that there are no cylinder rotation and no wind circulation from the perspective of the coordinate system of the blades, since the rotation of the blades causes the surrounding wind to circulate. Note that the calculation method for the Joukowski transformation itself is a common approach used in airplane wing design. The present embodiment is applied to blades that are specifically configured to rotate, for example, rotor sails and that are shaped to facilitate the circulation of the surrounding wind in accordance with the blades' rotation in order to strengthen the Magnus effect.

<Symmetry of Blades>

Fig. 21 illustrates the symmetry of the blades with respect to the direction of rotation. Fig. 21 shows virtual straight lines (in the illustrated example, four thin lines extending in the left-to-right direction) connecting the opposite ends of the respective blades, with their respective opposite ends being located on a virtual circle centered on the rotation axis, and does not show the external shapes of the blades.

Placing the ends of the blades on the virtual circle minimizes the area occupied by the system per propulsive force (the area over which the blades move) and also reduces aerodynamic drag during rotation, allowing the blades to rotate faster.

The plurality of blades are disposed such that they are line symmetrical with respect to the center line CL1, which passes through the center of rotation of the rotation axis and is parallel to the virtual straight lines, as viewed from the vertical direction. This can result in suppressing the center of gravity fluctuation during rotation.

The plurality of blades are disposed such that they are line symmetrical with respect to the center line CL2, which passes through the center of rotation of the rotation axis and is orthogonal to the virtual straight lines, as viewed from the vertical direction. This ensures that the characteristics of the propulsive force produced remain unchanged whether the blades are rotated in either the forward or reverse direction depending on the wind direction.

<Electric Motor>

Referring to Figs. 2 to 4 together, the rotation control unit 40 includes an electric motor 41 that can drive the assembly 4 in a rotating manner. The electric motor 41 can drive the assembly 4 to rotate around the rotation axis and also increase and decrease the speed of the rotation of the assembly 4. In other words, the electric motor 41 enables both the driving of the rotation of the blades 10A to 10H around the rotation axis and the acceleration and deceleration of the rotation of the blades 10A to 10H around the rotation axis.

<Brake Unit>

The wind propulsion system 100 further includes a brake unit 45 that brakes the blades 10A to 10H rotating around the rotation axis when a wind speed exceeding a threshold is detected by the detection unit 7. The brake unit 45 reduces the rotation speed of the blades 10A to 10H by braking the blades 10A to 10H rotating around the rotation axis during strong winds, thereby reducing the lift. Additionally, reducing the lift during headwinds can lead to reduction of induced drag.

<Energy Storage Unit>

The wind propulsion system 100 further includes an energy storage unit 46 that stores regenerative energy generated by the electric motor 41 when the rotation of the rotation axis is decelerated. With this configuration, it is possible to utilize the regenerative energy of the electric motor 41 stored in the energy storage unit 46. For example, the energy storage unit 46 may be configured to include a battery, capacitor, etc.

As described above, the rotor sail functions as a sail that converts the wind force into a propulsive force, and also operates as a generator capable of converting excess wind energy into electricity when the wind force exceeds propulsion commands. For example, the generated electricity may be used during propulsion or for general purposes such as lighting.

<Obtaining Unit>

The wind propulsion system 100 further includes the obtaining unit 133 that obtains the wind speed and wind direction of the wind currently occurring. When the rotation speed of the blades 10A to 10H rotating only by the wind currently occurring is below a threshold value, the rotation control unit 40 increases the rotation speed of the blades 10A to 10H rotating around the rotation axis, using the electric motor 41. For example, when the thrust that can be generated by the rotor sail rotating without energy supply based on the current wind speed and wind direction is insufficient to meet a thrust command, the thrust can be amplified by accelerating the rotation using the power of the electric motor 41.

For example, the threshold value for the rotational speed of the blades 10A to 10H (an example of a threshold value for the blade rotational speed) is calculated based on the thrust command. For example, the optimum rotational speed can be calculated from the thrust command, and based on that calculation result, the rotational speed of the blades 10A to 10H can be increased by the electric motor 41.

<Relationship Between Rotor Sail Control And Prime Mover Control>

The thrust that the rotor sail ship can generate without auxiliary power is limited. Accordingly, any shortfall in the thrust occurring without auxiliary power may be compensated by the drive mode of the rotor sail (the rotational driving of the blades 10A to 10H). For example, any shortfall in the thrust occurring with the drive mode of the rotor sail may be compensated by the propeller 51 (driving of the propeller).

For example, the central control unit 130 calculates the optimum rotation speed of the blades 10A to 10H rotating around the rotation axis based on the received thrust command and the results of detection of the wind direction and wind speed conducted when the thrust command is received. For example, when the rotational speed of the blades 10A to 10H is controlled, vector control may be used to control the q-axis current, enabling seamless control regardless of whether to drive or brake the blades. For example, the central control unit 130 may control cooperation between the blades 10A to 10H and the propeller 51 and adjust the thrust ratio between the rotor sail and the propeller 51 to maximize energy efficiency.

As described above, the wind propulsion system 100 is a system that converts the wind force into propulsive force. For example, when receiving a propulsive force command value from the remote control device 120, the wind propulsion system 100 calculates the optimum rotational speed of the blades 10A to 10H based on the wind direction and the wind speed so that the specified propulsive force is generated. Then, the electric motor 41 is controlled so that the calculated rotational speed is achieved. The rotational speed referred to here includes the direction of rotation. In the case of reverse rotation, the electric motor 41 is controlled at a negative speed.

For example, when the natural thrust of the rotor sail ship alone is insufficient, the propeller 51 is also driven. Depending on the wind direction, when the wind propulsion device 1 is more efficient than the propeller 51, the electric motor 41 is driven to increase the rotational speed and thus the propulsive force. On the other hand, when the propeller 51 is more efficient than the wind propulsion device 1, the wind propulsion device 1 is set to natural operation mode, and the propeller 51 is driven to generate propulsive force. Additionally, it is also possible to drive both the electric motor 41 of the wind propulsion device 1 and the propeller 51.

For example, multiple rotor sails can be arranged on the hull to adjust the rotational moment of the ship. For example, multiple rotor sails can be arranged at the front and rear of the hull, and the rotational speeds can be made different between the front and rear rotor sails. This allows the forces acting in the lateral direction of the ship to be set to different values between the front and rear rotor sails, thereby generating a moment.

<Steering Gear Control Unit>

Referring to Fig. 2, the wind propulsion system 100 further includes a steering gear control unit 125. When the rotation control unit 40 changes the rotational speed of the blades 10A to 10H around the rotation axis, the steering gear control unit 125 controls the steering gear to steer to a direction opposite to the inertial force generated in a direction opposite to the direction of changing the rotational speed of the blades 10A to 10H. By anticipating that the torque caused by the inertial force would impose on the hull 3, the steering gear control unit 125 cooperates with the rudder to counteract the torque and thus prevent the hull 3 from rotating.

For example, when the rotational speed of the blades 10A to 10H is changed by driving or braking, the steering gear control unit 125 may cooperate with the rudder. For example, when the electric motor 41 is in a free state and the blades 10A to 10H are rotating freely, the steering gear control unit 125 may not necessarily cooperate with the rudder. For example, when braking or driving to change the rotational speed of the blades 10A to 10H, torque may act on the hull 3, causing the hull 3 to rotate. To prevent this, when only one wind propulsion device 1 is installed, the steering gear control unit 125 desirably cooperates with the rudder to account for the torque acting on the hull 3, thereby preventing the hull 3 from rotating.

<Advantageous Effects>

As explained above, the wind propulsion device 1 relating to the present embodiment is installed on the ship 2 and configured to generate propulsive force by receiving wind. The wind propulsion device 1 includes the assembly 4, which is constituted by the rotors 20A and 20B that are rotatable around the rotation axis extending in the vertical direction and the plurality of plate-shaped blades 10A to 10H that are each fixed to the rotors 20A and 20B. The plurality of blades 10A to 10H are arranged such that the virtual straight lines connecting their respective opposite ends are parallel.

According to this configuration, wind tends to flow into the center of rotation of the blades 10A to 10H even if the solidity of the blades 10A to 10H is increased to generate the magnus effect. Therefore, the wind propulsion device 1 can efficiently convert wind power into the rotational force of the blades 10A to 10H. Thus, the wind propulsion device 1 can efficiently produce propulsive force based on the Magnus effect.

In the wind propulsion device 1 relating to the present embodiment, the plurality of blades 10A to 10H are disposed such that their respective opposite ends are located on a virtual circle centered on the rotation axis.

This configuration can lead to improved propulsive force relative to the area occupied by the blades. It also reduces the aerodynamic drag caused by the rotation and increases the rotation speed of the blades without energy relative to the wind speed, thereby increasing the propulsive force.

In the wind propulsion device 1 of this embodiment, the plurality of blades 10A to 10H are disposed such that, as viewed from the vertical direction, they are line symmetrical about the center line passing through the center of rotation of the rotation axis and parallel to the virtual straight lines.

According to this configuration, the center of gravity does not fluctuate even upon rotation, thus minimizing the centrifugal force exerted on the ship 2.

In the wind propulsion device 1 of this embodiment, the plurality of blades 10A to 10H are disposed such that, as viewed from the vertical direction, they are line symmetrical about the center line passing through the center of rotation of the rotation axis and orthogonal to the virtual straight lines.

According to this configuration, the characteristics of the propulsive force remain unchanged regardless of the direction of the rotation of the blades 10A to 10H. Therefore, the direction of rotation can be changed to match the wind direction for propulsion.

In the wind propulsion device 1 relating to the present embodiment, from among the blades 10A to 10H, the inner blades 10C to 10F are disposed such that the lengths of their virtual straight lines are at least 1/2 the diameter of the virtual circle centered on the rotation axis.

This configuration increases the acceleration and deceleration of the wind in front of and behind the blades, allowing the Magnus effect to improve the propulsive force relative to the area occupied by the blades.

In the wind propulsion device 1 relating to the present embodiment, the rotors 20A and 20B are plate-shaped rotating plates 20A and 20B. The plurality of blades 10A to 10H are each fixed to one face of the rotating plate 20A and to one face of the rotating plate 20B.

For example, when the plurality of blades 10A to 10H are connected to a rotatable pillar, the pillar is subject to fluid resistance, which reduces propulsion efficiency. This configuration, on the other hand, can avoid a reduction in propulsion efficiency because no pillar blocks the wind flow.

The wind propulsion system 100 of this embodiment includes the wind propulsion device 1 installed on the ship 2 and configured to generate propulsive force by receiving wind, and the wind power controller 140 configured to control the wind propulsion device 1. The wind propulsion system 100 includes the assembly 4 constituted by the plurality of plate-shaped blades 10A to 10H connected together and integrally rotatable around the rotation axis extending in the vertical direction, and the electric motor 41 configured to drive the rotation axis. The wind power controller 140 includes: the first obtaining unit 65 for obtaining the speed of the ship 2; the second obtaining unit 7 for obtaining wind condition information including the current wind speed and direction in the area where the ship 2 is located; the calculation unit 126 for calculating the relative wind direction relative to the wind propulsion system 1 based on the obtained speed of the ship 2 and wind condition information; and the rotation control unit 40 for controlling the electric motor 41 according to the calculated relative wind direction to adjust the rotation speed of the assembly 4.

With this configuration, the rotation control unit 40 can regulate the propulsive force. In addition, the thrust can be supplemented by controlling the rotational speed of the assembly 4 according to the relative wind direction and the rotational speed of the electric motor 41.

In the wind propulsion system 100 relating to the present embodiment, the rotation control unit 40 can adjust the propulsion force.

This configuration allows for easy adjustment of the propulsive force.

The wind propulsion system 100 relating to the present embodiment adjusts the propulsive force to adjust the induced drag.

This configuration allows for easy adjustment of the induced drag (e.g., the influence of the aspect ratio).

The wind propulsion system 100 relating to the present embodiment can generate electrical power simultaneously with adjusting the propulsive force.

This configuration can achieve electrical power generation and propulsion at the same time concurrently.

<Second Embodiment>

The following now describes a wind propulsion system relating to a second embodiment. In the following description, the parts having the same functions as in the first embodiment will have the same names and reference numerals, and their functions will not be specifically described.

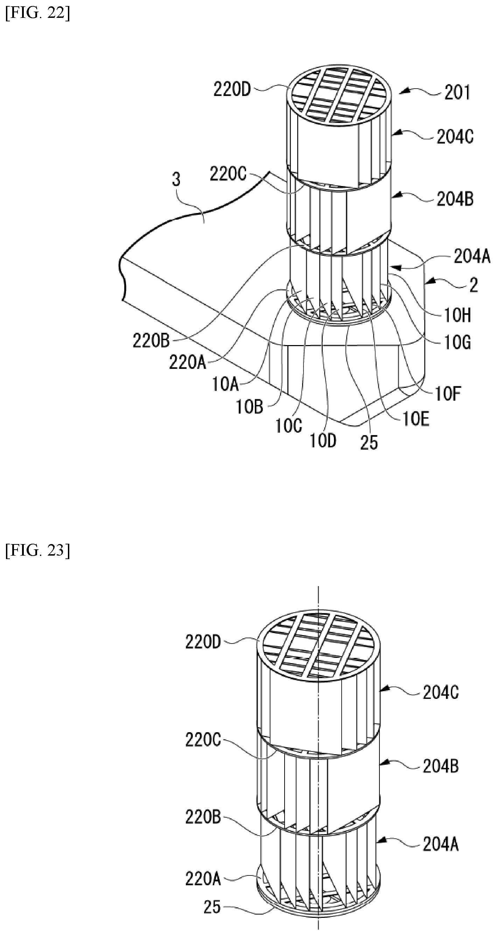

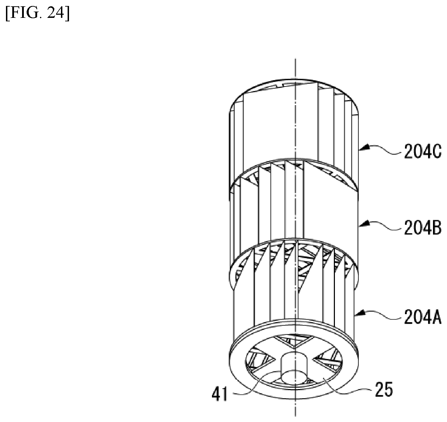

Fig. 22 is a perspective view showing a wind propulsion system according to the second embodiment. Fig. 23 is a perspective view as seen from above of a wind propulsion device 201 of the second embodiment. Fig. 24 is a perspective view as seen from below of the wind propulsion device 201 of the second embodiment.

Referring to Figs. 22 to 24 together, in the wind propulsion device 201 of the second embodiment, a plurality of assemblies 204A to 204C are provided next to each other along the direction of the rotation axis (the dash-dot line shown in the drawings). When the number of assemblies 204A to 204C is N and M is a natural number, the plurality of assemblies 204A to 204C are offset from one another by 180 x M/N degrees.

In the illustrated example, three assemblies 204A to 204C are offset from one another by 60 degrees. In the illustrated example, the three assemblies 204A to 204C include a first assembly 204A, a second assembly 204B that is offset by 60 degrees relative to the first assembly 204A (rotated by 60 degrees clockwise as viewed from above in the vertical direction), and a third assembly 204C that is offset by 120 degrees relative to the first assembly 204A (rotated by 120 degrees clockwise as viewed from above in the vertical direction). Note that the configuration (number and arrangement, etc.) of the plurality of assemblies 204A to 204C is not limited to the above and can be modified in accordance with the design specifications.

In the present embodiment, the first, second, and third assemblies 204A, 204B, and 204C, which constitute the three assemblies 204A to 204C, each have blades 10A to 10H. Their blades 10A to 10H are connected to each other via rotating plates 220A to 220D. In the present embodiment, the rotating plates 220A to 220D include a lower plate 220A, a first intermediate plate 220B, a second intermediate plate 220C, and an upper plate 220D.

The plurality of blades 10A to 10H constituting the first assembly 204A have their lower ends fixed to the lower plate 220A and their upper ends fixed to the first intermediate plate 220B. The plurality of blades 10A to 10H constituting the second assembly 204B have their lower ends fixed to the first intermediate plate 220B and their upper ends fixed to the second intermediate plate 220C. The plurality of blades 10A to 10H constituting the third assembly 204C have their lower ends fixed to the second intermediate plate 220C and their upper ends fixed to the upper plate 220D.

According to the foregoing configuration, the assemblies 204A to 204C have high strength because the entire cylinder, not a pillar, takes the load. The absence of a central pillar also reduces wind resistance. Furthermore, the plurality of assemblies 204A to 204C can be easily stacked by simply securing one assembly (e.g., first assembly 204A) to the other (e.g., second assembly 204B) using bolts or other fastening members. In addition, the plurality of assemblies 204A to 204C can be easily assembled on site since there are no motors or other moving parts in the connections between the assemblies 204A to 204C.

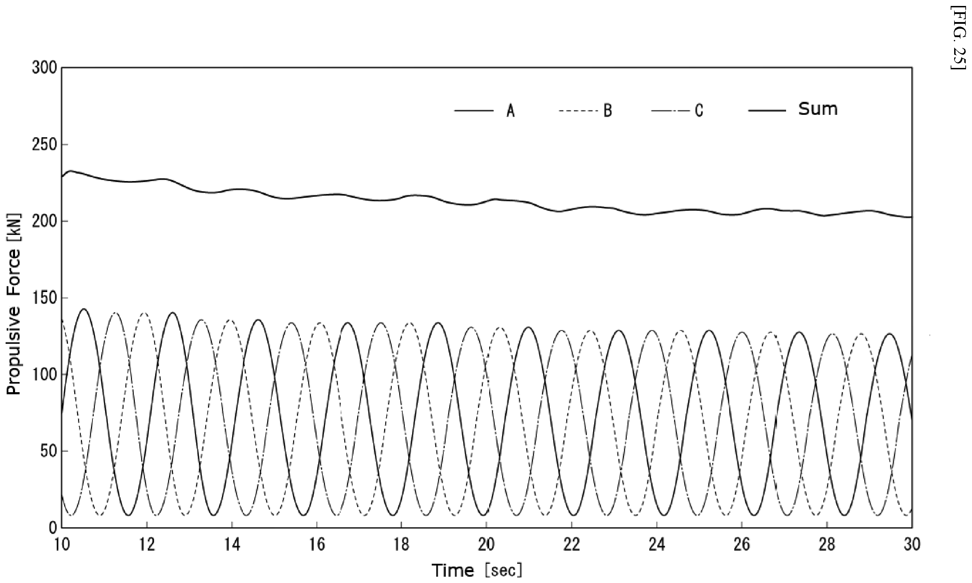

Fig. 25 shows an example of how the placement angles of the assemblies 204A to 204C are related to the propulsive force in the second embodiment. In Fig. 25, the graph A corresponds to the first assembly 204A, the graph B the second assembly 204B, the graph C the third assembly 204C, and the graph *Sum* shows the result of superimposing the graphs A to C.

Referring also to Fig. 25, the propulsive force of the wind propulsion system fluctuates when focusing on each of the assemblies 204A to 204C. For example, when the wind propulsion system includes only one type of assembly (e.g., any one of the assemblies 204A to 204C), the propulsive force generated based on the wind is dependent on the rotational angle. According to this embodiment, on the other hand, the three assemblies 204A to 204C are stacked and offset from one another by 60 degrees. In this way, the present embodiment can produce a nearly constant propulsive force since the fluctuations are canceled out by combining the respective forces produced by the assemblies 204A to 204C.

In the wind propulsion device 201 of the present embodiment, the assemblies 204A to 204C are provided next to each other along the direction of the rotation axis. If the number of assemblies 204A to 204C is N and M is a natural number, the plurality of assemblies 204A to 204C are offset from one another by 180 x M/N degrees.

This configuration reduces the rotational angle dependence of the propulsive force obtained from the wind.

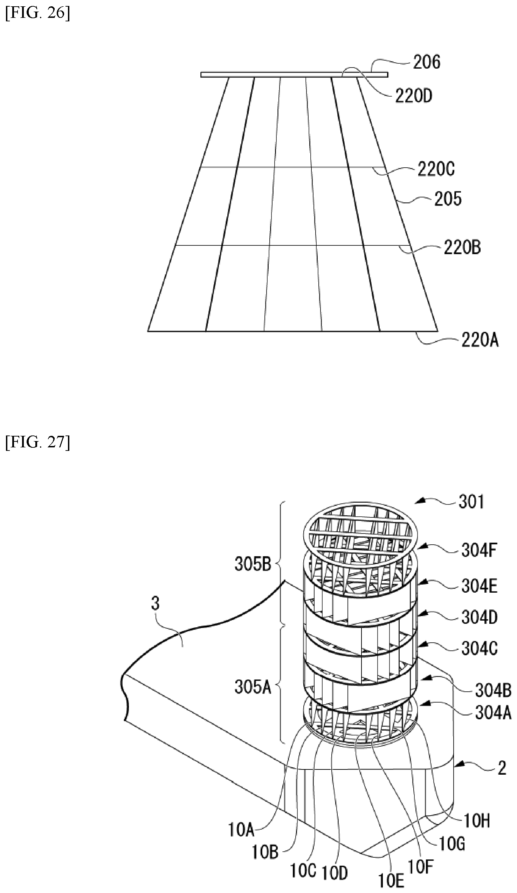

Fig. 26 shows a modification example of the wind propulsion device 201 of the second embodiment.

Referring to Fig. 26, the cylindrical surface 205 defined by the rotational locus of the plurality of blades around the rotation axis may be tapered toward the side opposite to the portion connected to the lower plate 220A (an example of a rotating plate). In the illustrated example, the cylindrical surface 205 tapers upward in the vertical direction. For example, a winglet 206 may be provided at the top of the cylindrical surface 205.

This modification example can reduce the influence of the aspect ratio (e.g., induced drag). The aspect ratio represents the ratio of the height to the diameter of the cylinder defined by the rotational locus of the blades.


<Third Embodiment>


The following now describes a wind propulsion system relating to a third embodiment. In the following description, parts that have the same functions as those described in the first and second embodiments will have the same names and reference numerals, and their functions will not be specifically described.

Fig. 27 is a perspective view showing the wind propulsion system according to the third embodiment. A wind propulsion device 301 of the third embodiment has two units 305A and 305B, each of which is constituted by a plurality of assemblies 304A to 304F offset from one another by 180 x M/N degrees. The two units 305A and 305B are stacked such that the assemblies 304A to 304C in the unit 305A are stacked in a reverse order relative to the assemblies 304D to 304F in the unit 305B in the vertical direction (an example of a predetermined direction).

In the illustrated example, the two units 305A and 305B include a first unit 305A and a second unit 305B. The first unit 305A includes a first assembly 304A, a second assembly 304B offset by 60 degrees (rotated by 60 degrees clockwise as viewed from above in the vertical direction) relative to the first assembly 304A, and a third assembly 304C offset by 120 degrees (rotated by 120 degrees clockwise as viewed from above in the vertical direction) relative to the first assembly 304A.

On the other hand, the second unit 305B includes a fourth assembly 304D at the same angle as the third assembly 304C (their blades overlap as viewed from above in the vertical direction), a fifth assembly 304E offset by 60 degrees (rotated by 60 degrees counterclockwise as viewed from above in the vertical direction) relative to the third assembly 304C, and a sixth assembly 304F offset by 120 degrees (rotated by 120 degrees counterclockwise as viewed from above in the vertical direction) relative to the third assembly 304C.

The configuration (number and arrangement, etc.) of the plurality of assemblies 304A to 304F constituting the units 305A and 305B is not limited to the above, but can be modified according to the design specifications.

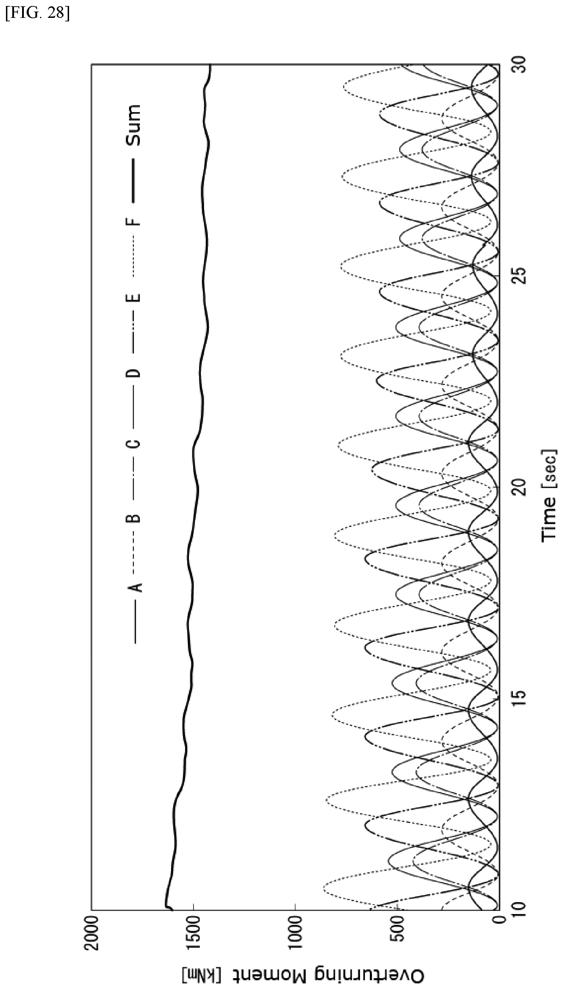

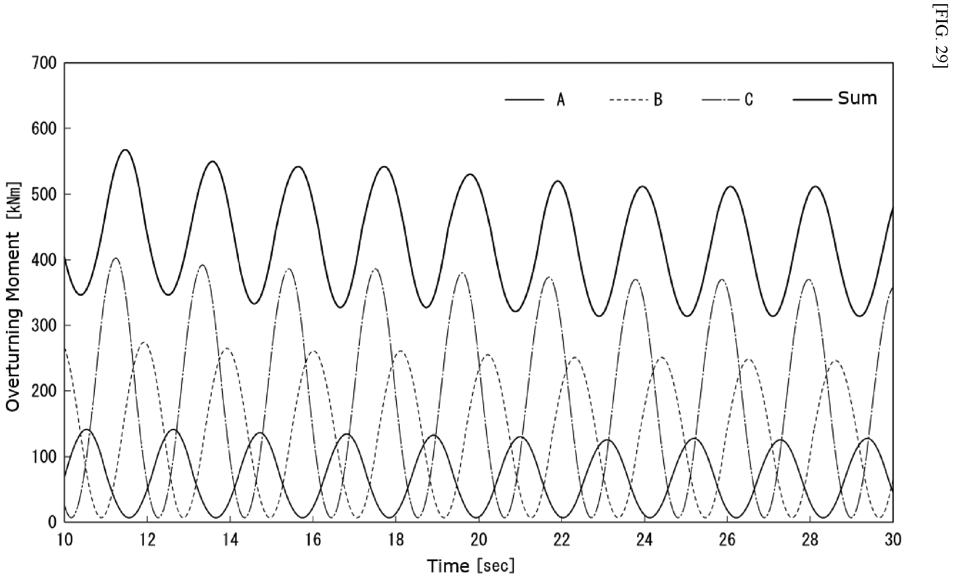

Fig. 28 shows an example of how the placement angles of the assemblies 304A to 304F are related to an overturning moment in the third embodiment. Fig. 29 shows an example of how the placement angles of the assemblies 304A to 304C are related to an overturning moment in a comparative example. In Fig. 28, the graph A corresponds to the first assembly 304A, the graph B the second assembly 304B, the graph C the third assembly 304C, the graph D the fourth assembly 304D, the graph E the fifth assembly 304E, the graph F the sixth assembly 304F, and the graph *Sum* the result of superimposing the graphs A to F. In Fig. 29, the graph A corresponds to the first assembly 304A, the graph B the second assembly 304B, the graph C the third assembly 304C, and the graph *Sum* the result of superimposing the graphs A to C. The comparative example corresponds to the second embodiment.

Referring to Fig. 29, simply stacking the assemblies 304A to 304C at offset angles may be able to counteract the fluctuations in propulsive force, but it is not sufficient to counteract the fluctuations in overturning moment. The comparative example shown in Fig. 29 can not cancel out the fluctuations in overturning moment, which is the sum of adding the height from the ship to the propulsive force. The overturning moment can cause the ship to pitch or roll.

On the other hand, according to the third embodiment, as shown in Fig. 28, the two units 305A and 305B are stacked such that the assemblies at offset angles in the unit 305A are stacked in a reverse order relative to those in the unit 305B in the vertical direction. Therefore, the overturning moment can remain nearly constant since the fluctuations in overturning moment are canceled out. This can lead to reduction of the ship's pitching and rolling.

The wind propulsion device 301 relating to the present embodiment has the two units 305A and 305B, which are constituted by the plurality of assemblies 304A to 304F that are offset from one another by 180 x M/N degrees. The two units 305A and 305B are stacked such that the assemblies 304A to 304C in the unit 305A are stacked in a reverse order relative to the assemblies 304D to 304F in the unit 305B in the vertical direction.

This configuration can further reduce the rotational angle dependence of the overturning moment caused by the wind.

<Fourth Embodiment>

The following now describes a wind propulsion system relating to a fourth embodiment. In the following description, parts that have the same functions as those described in the first to third embodiments will have the same names and reference numerals, and their functions will not be specifically described.

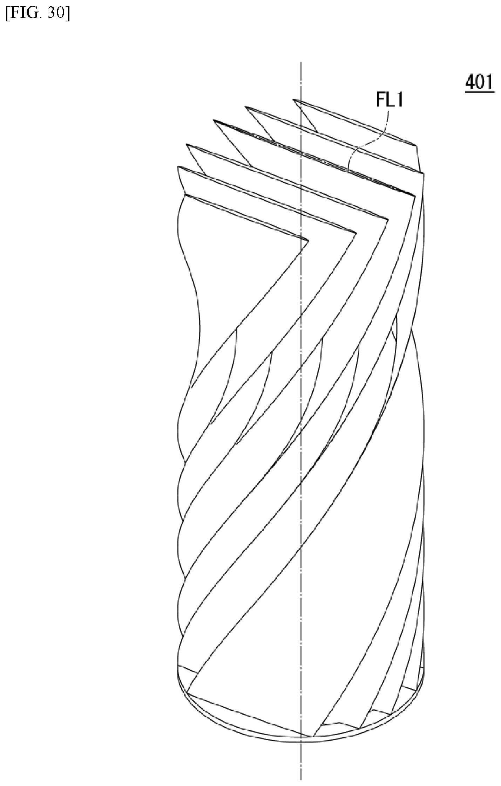

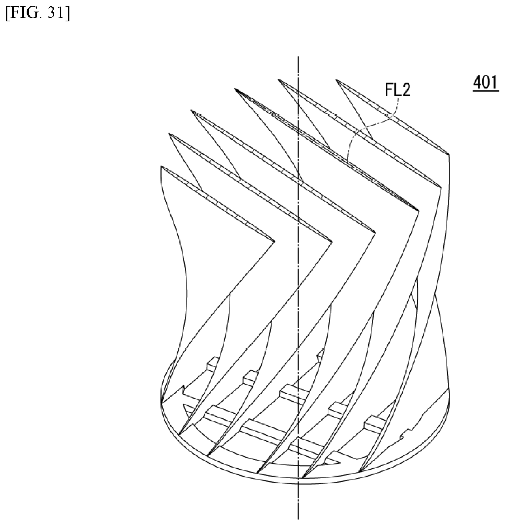

Fig. 30 is a top perspective view as seen from a first position showing a plurality of blades in a wind propulsion device 401 according to the fourth embodiment. Fig. 31 is a top perspective view as seen from a second position showing the plurality of blades in the wind propulsion device 401 according to the fourth embodiment. In Figs. 30 and 31, the top plate and other parts of the assembly are omitted.

Referring to Figs. 30 and 31 together, in the wind propulsion device 401 of the fourth embodiment, the plurality of blades are twisted such that first virtual straight lines FL1 (the drawings only show the first virtual straight line FL1 for one of the blades) connecting the respective opposite ends of the plurality of blades at a first position on the rotation axis (indicated by the dash-dot line in the drawings) intersect, as seen from the vertical direction (an example of a predetermined direction), second virtual straight lines FL2 (the drawings only show the second virtual straight line FL2 for one of the blades) connecting the respective opposite ends of the plurality of blades at a second position different from the first position on the rotation axis.

In the illustrated example, the six blades are twisted such that their first virtual lines FL1 at the first position on the rotation axis intersect, as seen from the vertical direction, the second virtual straight lines FL2 at the second position on the rotation axis. In other words, the six blades are twisted such that their respective sections orthogonal to the vertical direction are the same at a given position on the rotation axis. It should be noted that the manner of twisting (such as the shape) of the plurality of blades is not limited to the above and may be modified in accordance with the design specifications.

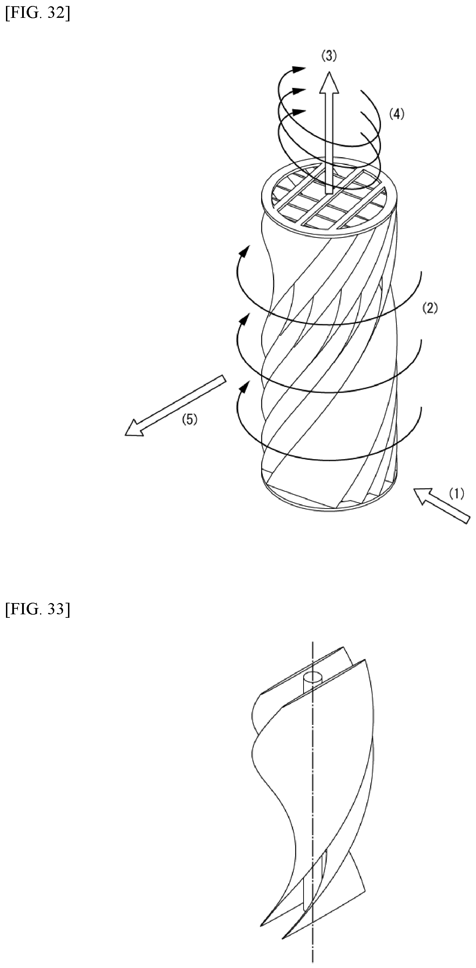

Fig. 32 illustrates how the wind propulsion device 401 of the fourth embodiment works.

Referring to Fig. 32, the present embodiment has a plurality of parallel blades that are twisted and extended in the height direction, creating an updraft, maintaining the air circulation beyond the blade tips, and reducing the induced drag. When the blades are rotated in the reverse direction, the airflow is downward, but the same effect can be generated.

The present embodiment can produce propulsive force in the following steps (1) to (5).

(1) Natural wind blows in the direction of the arrow.
(2) The natural wind causes the blades to rotate, generating circulating airflow.
(3) Due to the twisted shape, the blades generate an updraft.
(4) The circulating airflow caused by the blades is carried upward by the updraft.
(5) The interaction of the natural wind and the circulating airflow generates a propulsive force (the Magnus force) in the direction orthogonal to the wind of (1).

In the wind propulsion device 401 of the present embodiment, the plurality of blades are twisted such that the first virtual straight lines FL1 connecting the respective opposite ends of the plurality of blades at the first position on the rotation axis intersect, as seen from the vertical direction, the second virtual straight lines FL2 connecting the respective opposite ends of the plurality of blades at the second position different from the first position on the rotation axis.

According to the configuration, the plurality of blades are twisted along the vertical direction, thus generating airflow along the vertical direction. Thus, the induced drag can be reduced and the propulsion efficiency can be eventually improved.

Fig. 33 shows a modification example where the plurality of blades have a twisted shape.

Referring to Fig. 33, two blades face each other with a pillar between them, and the pillar is positioned on the rotation axis (the dash-dot line shown in the drawing). The two blades may be twisted such that their first virtual straight lines at a first position on the rotation axis intersect their second virtual straight lines at a second position on the rotation axis when viewed from the vertical direction. For example, when a plurality of assemblies are provided, each assembly may be twisted 60 degrees. The configuration (the angle, etc.) of the twisted blades of the assembly is not limited to the above, and may be modified in accordance with the design specifications.

According to this modification example, twisting the blades can counteract the vibrations. For example, when a plurality of assemblies are provided, each assembly may be twisted a predetermined angle, which can smooth the characteristics. In this way, the rotational angle dependence of the propulsive force derived from the wind can be further reduced, and the influence of the aspect ratio (e.g., induced drag) can be reduced.

The twisting may be reversed at the intermediate position. Alternatively, a unit with twisted blades may be superimposed on a unit with blades twisted in the opposite direction. This configuration can also counteract the vibration of the overturning moment.

<Fifth Embodiment>

The following now describes a wind propulsion system relating to a fifth embodiment. In the following description, parts that have the same functions as those described in the first to fourth embodiments will have the same names and reference numerals, and their functions will not be specifically described.

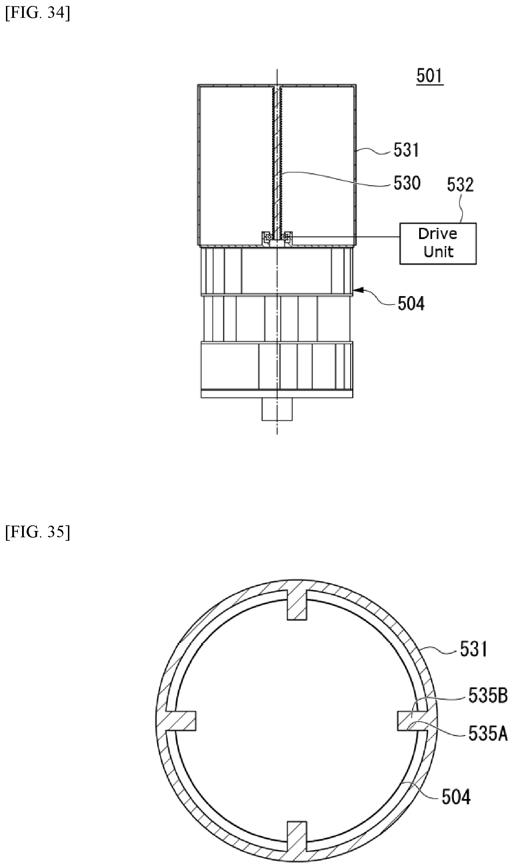

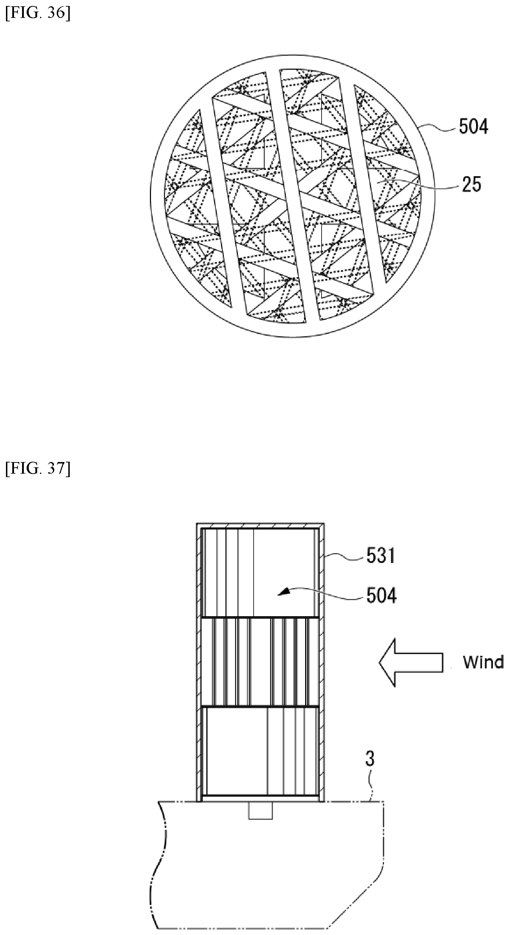

Fig. 34 is a side view including a longitudinal section of a wind propulsion device 501 of the fifth embodiment. Fig. 35 includes a cross section of the wind propulsion device 501 of the fifth embodiment. Fig. 36 shows a top view of the wind propulsion device 501 of the fifth embodiment.

Referring to Figs. 34 to 36, the wind propulsion device 501 of the fifth embodiment further includes: a shaft portion 530 extending along the rotation axis (indicated by the dash-dot line in Fig. 34) and provided on an assembly 504; a cover 531 connected to the shaft portion 530 in such a manner that the cover 531 can move upward and downward; and a drive unit 532 (e.g., a motor, etc.) configured to move the cover 531 between a non-operating position where the cover 531 covers the assembly 504 and an operating position where the cover 531 does not cover the assembly 504. The cover 531 rotates integrally with the assembly 504.

For example, the cover 531 may be connected to the assembly 504 with sliding structures 535A and 535B between them so that the cover 531 can move upward and downward. In the illustrated example, the sliding structures 535A and 535B constitute a concave-convex structure, which includes four concave portions 535A formed at equal intervals on the outer circumference of the cylindrical assembly 504, and convex portions 535B formed at equal intervals on the inner circumference of the cover 531 and fitted in the concave portions 535A. The sliding structures are not limited to the concave-convex structure described above, and can be modified in accordance with the design specifications.

For example, the connecting structure between the shaft portion 530 and the drive unit 532 may include a rack and pinion, a ball screw, or other mechanisms. For example, when the shaft portion 530 is externally threaded, the drive unit 532 may have internal threads at the connection site with the shaft portion 530 that mesh with the external threads. The connecting structure between the shaft portion 530 and the drive unit 532 is not limited to the above, and can be modified in accordance with the design specifications.

Although not shown in the drawings, reinforcement members may be provided to reinforce the blades, for example, in the regions overlapping the support plate 25 on the hull 3 in the top view and between the blades (indicated by the dashed lines in Fig. 36). For example, the reinforcement members may include a pillar extending along and located on the rotation axis. For example, the configuration of the reinforcement members can be modified in accordance with the design specifications.

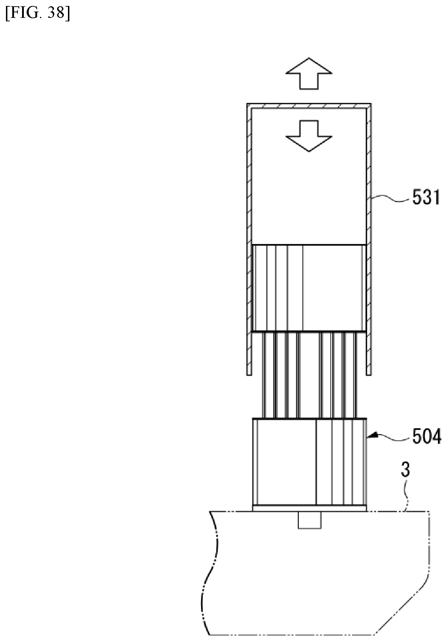

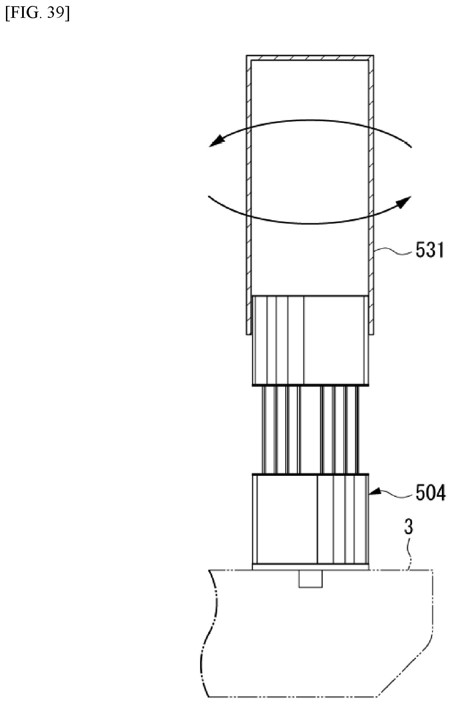

Fig. 37 shows an example of how the wind propulsion device 501 of the fifth embodiment works. Fig. 38 shows an example of how the wind propulsion device 501 of the fifth embodiment works. Fig. 39 shows another example of how the wind propulsion device 501 of the fifth embodiment works.

Referring to Figs. 37 to 39, in this embodiment, when the assembly 504 is not in operation, the cover 531 reduces the force received in strong winds. When the assembly 504 is in operation, the rotation of the cover 531 induces the Magnus effect, so that propulsive force is produced.

As shown in Fig. 37, for example, when the assembly 504 is not in operation, the cover 531 is moved downward so that it covers the entire assembly 504. In this way, the assembly 504 is not exposed to wind, thereby significantly reducing wind resistance.

As shown in Fig. 38, for example, the cover 531 can be moved upward and downward depending on whether the assembly 504 is in operation or not in operation. For example, the cover 531 can be moved upward and downward by controlling the drive unit 532 (e.g., controlling the direction of rotation of the motor).

As shown in Fig. 39, for example, when the assembly 504 is in operation, the cover 531 rotates as the assembly 504 rotates. This amplifies the propulsive force, since the Magnus effect can be generated not only by the assembly 504 but also by the cover 531.

The wind propulsion device 501 relating to the present embodiment further includes: the shaft portion 530 extending along the rotation axis and provided on the assembly 504; the cover 531 connected to the shaft portion 530 in such a manner that the cover 531 can move upward and downward; and the drive unit 532 configured to move the cover 531 between a non-operating position where the cover 531 covers the assembly 504 and an operating position where the cover 531 does not cover the assembly 504.

According to the present configuration, the cover 531, which is configured to switch the operation/non-operation of the assembly 504, can also generate the Magnus effect during operation, improving the propulsion efficiency.

In the wind propulsion device 501 relating to the present embodiment, the cover 531 rotates integrally with the assembly 504.

As the cover 531 rotates integrally with the assembly 504, the cover 531 can also generate the Magnus force.

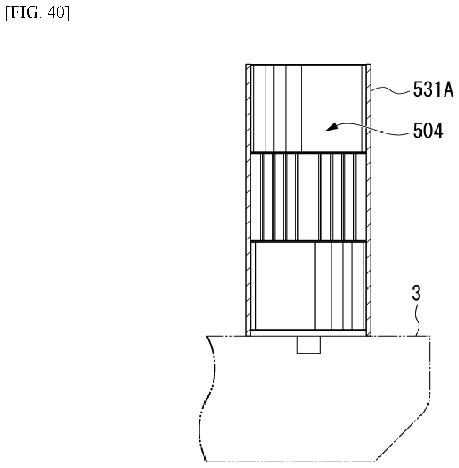

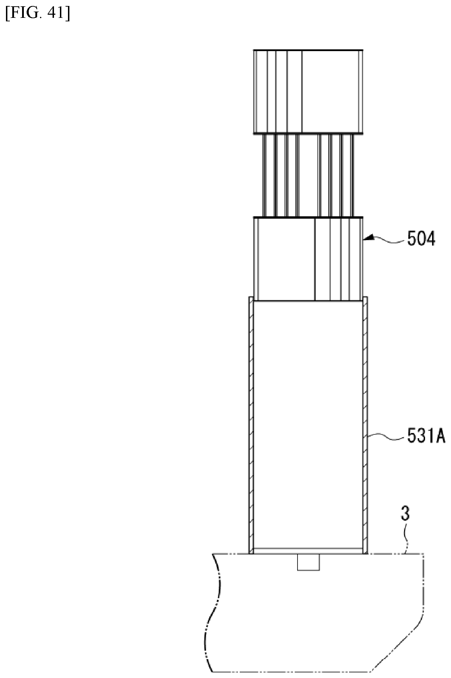

Fig. 40 shows a modification example of the wind propulsion device 501 of the fifth embodiment. Fig. 41 shows an example of how the modification example of the wind propulsion device 501 of the fifth embodiment works.

Referring to Figs. 40 and 41 together, a cover 531A may be provided on the hull 3. The cover 531A may be connected to the hull 3 such that the cover 531A is rotatable about the rotation axis. For example, the assembly 504 may be connected to the cover 531A installed on the hull 3 such that the assembly 501 can move upward and downward.

According to this modification example, when the assembly 504 is not in operation, the cover 531A reduces the force received in strong winds. When the assembly 504 is in operation, the rotation of the cover 531A induces the Magnus effect, so that the propulsive force is produced.

<Sixth Embodiment>

The following describes a wind propulsion system relating to a sixth embodiment. In the following description, parts that have the same functions as those described in the first to fifth embodiments will have the same names and reference numerals, and their functions will not be specifically described.

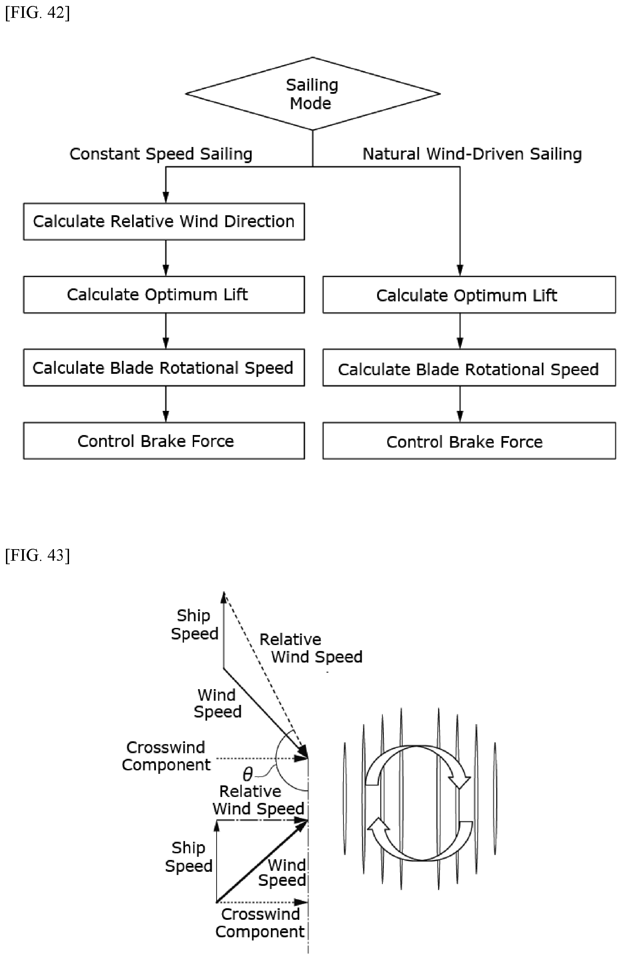

Fig. 42 shows a diagram showing an example of how to control a brake force during a sailing mode in the wind propulsion system of the sixth embodiment.

Referring to Fig. 42, the brake force control performed during the sailing mode by the wind propulsion system can be divided into "constant speed sailing" and "natural wind-driven sailing". The term "natural wind-driven sailing" refers to that propulsion is achieved solely by wind power, without the use of other motive power such as underwater propellers. There is also an intermediate sailing mode between "low-speed sailing" and "natural wind-driven sailing," where the percentage of the motive power produced by underwater propellers and the like is lowered. In this intermediate sailing mode, the intermediate value between the two is optimal.

Fig. 43 illustrates relative wind speed and other factors during headwinds. In Fig. 43, $\theta$ means the wind direction taking into account the relative wind speed resulting from the ship speed.

Referring to Fig. 43, when the blades are rotated by wind force, an increase in the relative headwind due to sailing of the ship causes the blades to rotate at a higher speed. Therefore, the Magnus effect increases the forward propulsion.

General sailing ships use a combination of lift and drag to propel them forward. If the ships' speed increases, the relative headwind causes an increase in the drag, which reduces the propulsive force. In the case of rotor sails, an increase in the wind results in an increase in the energy required to rotate the rotor (cylinder). Therefore, the propulsive force per the same energy is decreased.

In contrast, the wind propulsion system relating to the present embodiment uses the wind force to rotate the blades. As the ship sails and the relative headwind thus becomes stronger, the blades rotate at a higher speed. In this way, forward propulsive force can be produced even in headwinds due to the Magnus effect.

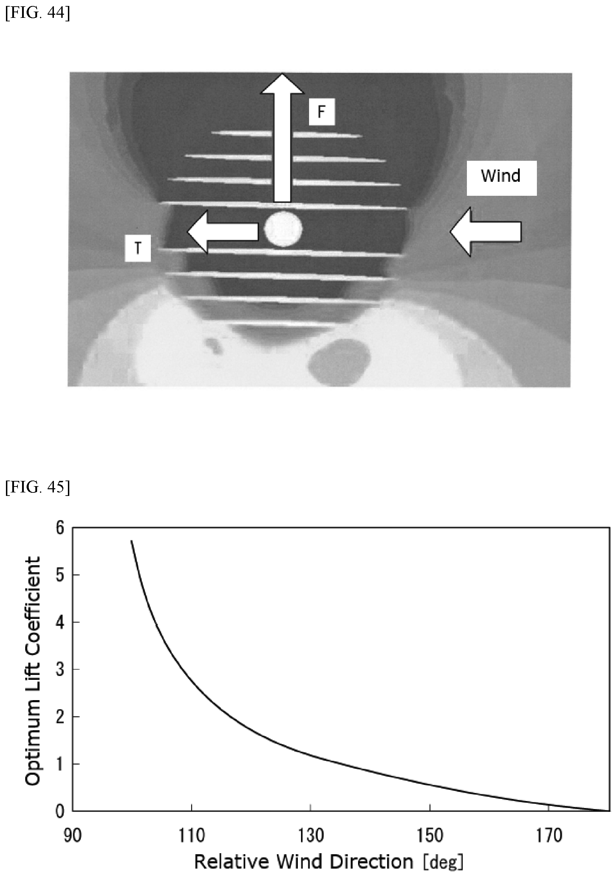

Fig. 44 shows an example of the wind-direction force component and the orthogonal force component for an eight-blade arrangement.

Referring to Fig. 44, the wind-direction force component and the orthogonal force component are calculated, for example, by fluid analysis (two-dimensional analysis). For example, for the eight-blade arrangement shown in Fig. 44, the drag T = 39 kN and the lift F = 354 kN, yielding the lift-to-drag ratio F/T = 9.

For example, in the case of a direct crosswind (e.g., the wind speed = 10 m/s), the propulsive force becomes zero when the speed reaches the wind speed multiplied by the lift-to-drag ratio. This speed (e.g., 90 m/s) can be reached if the wind propulsion system travels under the natural wind-driven sailing control scheme assuming zero resistance. The propulsive force produced by wind is maximized when the speed is equal to 2/3 of the above speed (e.g., 60 m/s).

While the above describes the results of two-dimensional analysis, the aspect ratio becomes a factor in three-dimensional analysis. In general, lift is accompanied by induced drag. This effect is significant when the lift is large and the aspect ratio is low.

The equations indicating the relationships for the three-dimensional analysis are shown in the following Equations (1) to (5). In the equations, $C_D$ represents the drag constant, $C_{D0}$ the drag constant in the two-dimensional analysis, $C_L$ the lift constant, $\pi$ the pi, e the Oswald efficiency factor, AR the aspect ratio, $\theta$ the wind direction (the wind direction taking into account the relative wind speed resulting from the ship speed), V the wind speed, $\rho$ the density, and S the blade area.

[Equation 1]

$$C_D = C_{D0} + \frac{C_L^2}{\pi e AR} \qquad \cdots \quad \text{Equation (1)}$$

The above Equation (1) indicates that blades applied to, for example, high-speed movable bodies are preferably slender.

# EP 4 775 833 A1

[Equation 2]

$$Lsin\theta + Tcos\theta = \{C_L sin\theta + C_D cos\theta\}(1/2\rho V^2 S)$$
$$= \{C_L sin\theta + (C_{D0} + C_L{}^2/(\pi eAR))cos\theta\}(1/2\rho V^2 S) \qquad \cdots \text{ Equation (2)}$$

The forward propulsive force can be obtained by maximizing the value of Equation (2). In the case of a tailwind, it is sufficient to maximize the lift constant $C_L$. In most cases, however, the wind is a headwind ($\theta$ is an obtuse angle) since the ship has its own speed. In that case, an optimum value of $C_L$ exists. Differentiating the above Equation (2) to find the extremum yields the following Equation (3).

[Equation 3]

$$C_L = (1/2)tan\theta \ \pi eAR \qquad \cdots \text{ Equation (3)}$$

For example, the lift-to-drag ratio may be maximized in order to achieve the maximum speed under the natural wind-driven sailing control scheme. Differentiating the following Equation (4) indicates that the lift-to-drag ratio is maximized when the condition in the following Equation (5) is satisfied, which means the maximum speed can be reached.

[Equation 4]

$$C_L/C_D = C_L/\left(C_{D0} + C_L{}^2/(\pi eAR)\right) \qquad \cdots \text{ Equation (4)}$$

[Equation 5]

$$C_L = (C_{D0}\pi eAR)^{0.5} \qquad \cdots \text{ Equation (5)}$$

<Constant Speed Sailing>

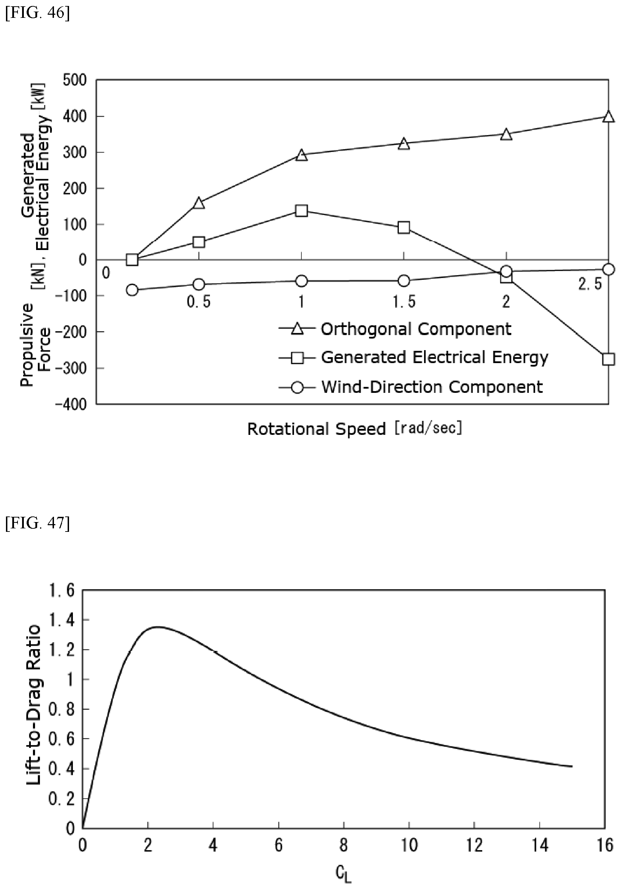

Fig. 45 shows an example of the relationship between relative wind direction and optimum lift coefficient. Fig. 46 shows an example of the relationship between rotational speed, propulsive force, and generated electrical energy.

Referring to Figs. 42 to 46 together, the relative wind direction is first calculated, for example, in the case of the constant speed sailing. For example, the relative wind direction is calculated based on the obtained ship's speed and wind condition information. The relative wind direction may be detected by the detection unit 7 (an example of the second obtaining unit).

Following this, the calculated relative wind direction is used to calculate the optimum lift coefficient. For example, the optimum lift coefficient is calculated based on Equation (3) or the graph shown in Fig. 45 (e.g., data obtained in advance).

Next, the calculated optimum lift coefficient is used to calculate the blade rotational speed. For example, the blade rotational speed is calculated based on the graph shown in Fig. 46 (e.g., data obtained in advance).

Next, the calculated blade rotational speed is used to control the brake force. For example, the brake force may be controlled such that predetermined propulsive force and energy are generated while the blade rotational speed is maintained at a constant level. For example, in a headwind, the brake is applied (power generation is performed) to reduce the rotational speed and adjust the lift coefficient.

<Natural Wind-Driven Sailing>

Fig. 47 shows an example of the relationship between lift constant and lift-to-drag ratio. According to Fig. 47, the lift coefficient takes an optimum value when the aspect ratio AR = 2.5.

Referring to Figs. 42 to 47, in the case of the natural wind-driven sailing, the optimum lift coefficient is first calculated, for example. For example, the optimum lift coefficient is calculated based on Equation (5) or the graph shown in Fig. 47 (e.g., data obtained in advance).

Next, the calculated optimum lift coefficient is used to calculate the blade rotational speed and control the brake force. The blade rotational speed calculation and brake force control in the natural wind-driven sailing may be performed in the same manner as in the constant speed sailing described above.

<Modification Examples>

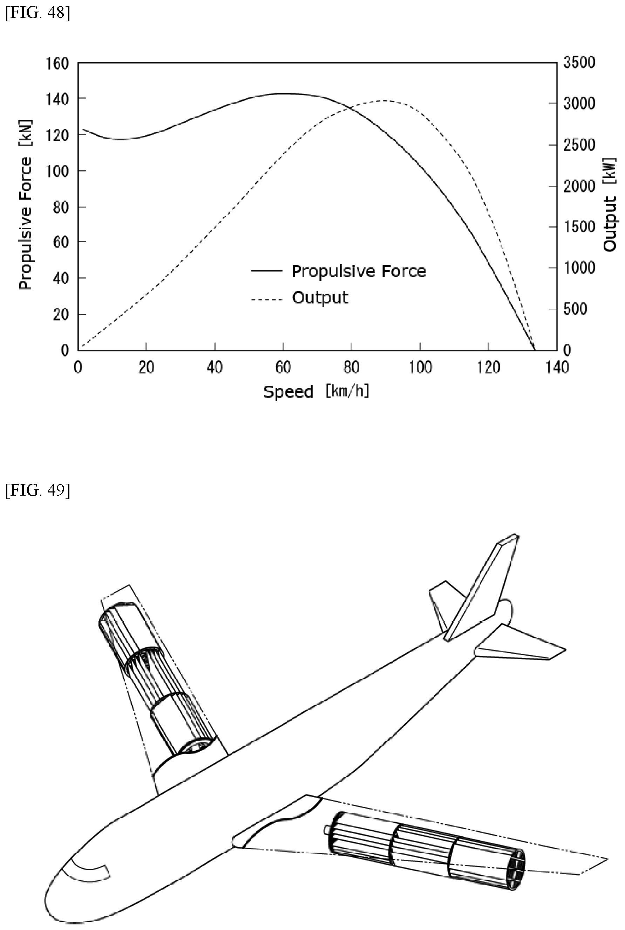

Fig. 48 shows an example of the relationship between speed per hour, propulsive force, and output.

Referring to Fig. 48, the output produced by wind is maximized at the speed of about 25 knots (50km/h or less) in the case of general sailing ships, while rotor sail ships can reach as high speed as about 90 km/h (about twice the speed of general sailing ships). Therefore, the configuration of the present embodiment can be applied to high-speed movable bodies (e.g., high-speed ships, automobiles, etc.).

<Other Examples of Movable Body>

The following describes other examples (modification examples) of the movable body in which the wind propulsion devices of the embodiments are installed. Sails of ships, airplane wings, rotor blades, and windmill blades have the same feature of generating lift, and the present invention can be applied to them with the effect of generating a large lift force (Magnus force) while also generating electricity. In the following description, parts that have the same functions as those described in the first to sixth embodiments will have the same names and reference numerals, and their functions will not be specifically described.

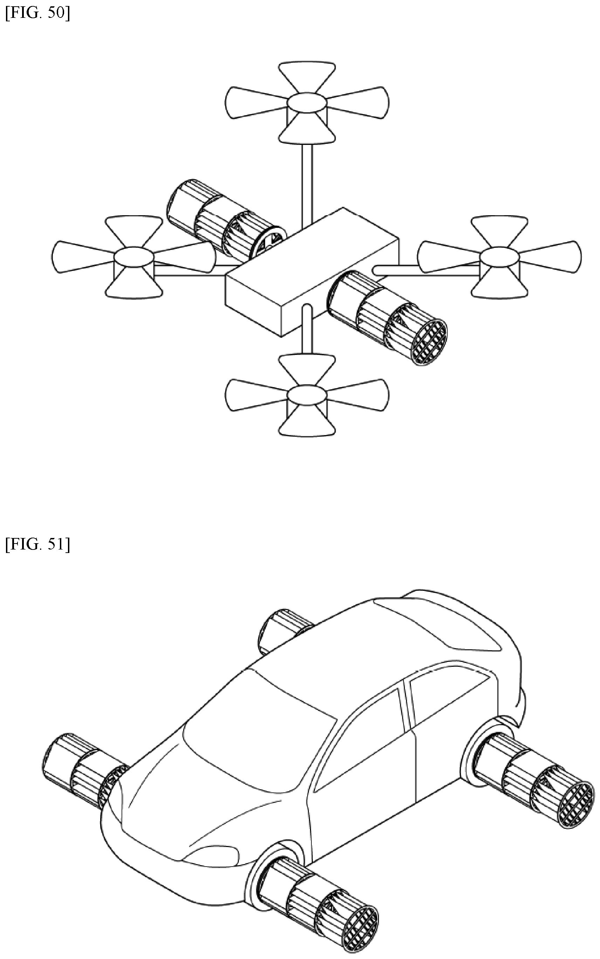

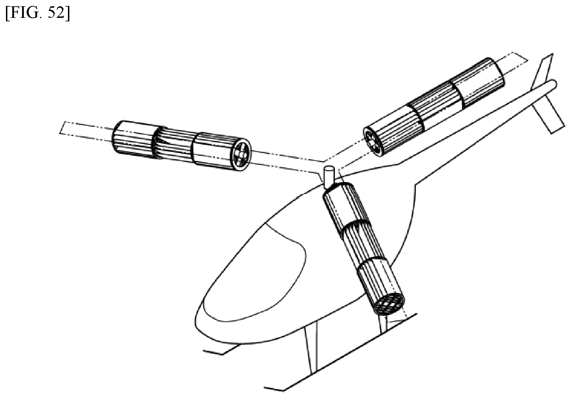

Fig. 49 is a perspective view of a first modification example of the movable body. Fig. 50 is a perspective view of a second modification example of the movable body. Fig. 51 is a perspective view of a third modification example of the movable body. Fig. 52 is a perspective view of a fourth modification example of the movable body.

Referring to Figs. 49 to 51, the wind propulsion device may be applied to the wings of aerial vehicles. Figs. 49, 50, and 51 show an airplane, a drone, and a flying car, respectively.

For example, in the case of fixed-wing aerial vehicles, lift is determined by flight speed and wing size. Consequently, small fixed-wing aerial vehicles are not capable of carrying heavy loads. Conversely, accommodating heavy loads requires larger wings or higher speeds during takeoff and landing, which necessitates longer runways. In the case of Magnus wings (cylindrical wings), energy is continuously required.

In contrast, these modification examples include the wind propulsion device capable of generating greater lift than conventional wings or blades (sails). This enables the use of smaller wings or blades while retaining the capacity to carry heavy loads. Furthermore, these modification examples can levitate at low speeds. Therefore, if the wind propulsion devices of the embodiments are applied to airplanes and the like, only short runways are required. In addition, unlike Magnus wings (cylindrical wings), the blades of the wind propulsion devices of the embodiments are rotated by the force of the wind, eliminating the need for energy.

According to these modification examples, as the aerial vehicles move forward, they will hit a relative headwind, which will cause the blades to rotate and generate upward lift. In addition, the lift can be adjusted by adjusting the rotational speed of the blades. The blades can serve as flaps of the airplane.

Referring also to Fig. 52, the wind propulsion devices may be applied to the rotary wings. For example, the main wings may be rotated by the power of the motor, which is accompanied by relative wind. This causes the blades to rotate, thereby generating upward lift.

<Application Examples of Wind Propulsion System>

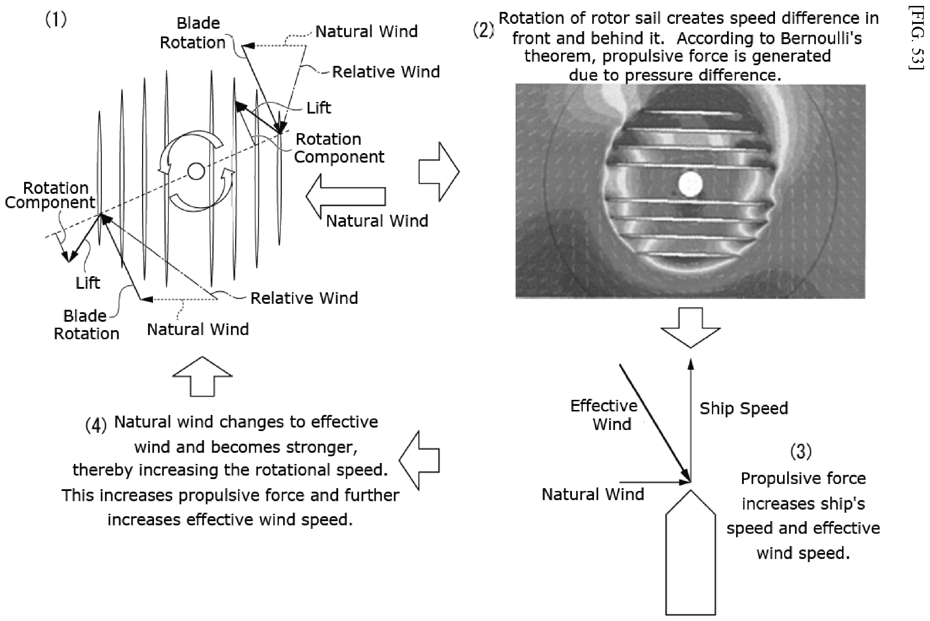

Fig. 53 illustrates an example of the application of the wind propulsion system, where a rotor sail is installed in a ship to generate electrical power.

Referring to Fig. 53, this embodiment can achieve improved electrical power generation efficiency due to the synergistic effect of the rotational and propulsive forces. For example, the rotor sail ship (a ship with the rotor sail of the present invention) may be regarded as part of the blades of a wind turbine. In this way, the rotor sail ship may generate electrical power while sailing through windy areas. For example, as the ship provides mobility to the wind turbine, the wind turbine can collect wind energy over a wide area. Consequently, the wind turbine may be capable of generating more power beyond the efficiency limit of a fixed wind turbine (e.g., Betz limit $\approx$ 60%).

The present embodiment can achieve improved electrical power generation efficiency in the following steps (1) to (4).

(1) Natural wind blows in the direction indicated by the arrow.
(2) The rotation of the rotor sail creates a speed difference in front and behind it. According to Bernoulli's theorem, a propulsive force is generated due to the pressure difference.
(3) The propulsive force increases the ship's speed and effective wind speed.
(4) The natural wind changes to effective wind and becomes stronger, thereby increasing the rotational speed. This increases the propulsive force and further increases the effective wind speed.

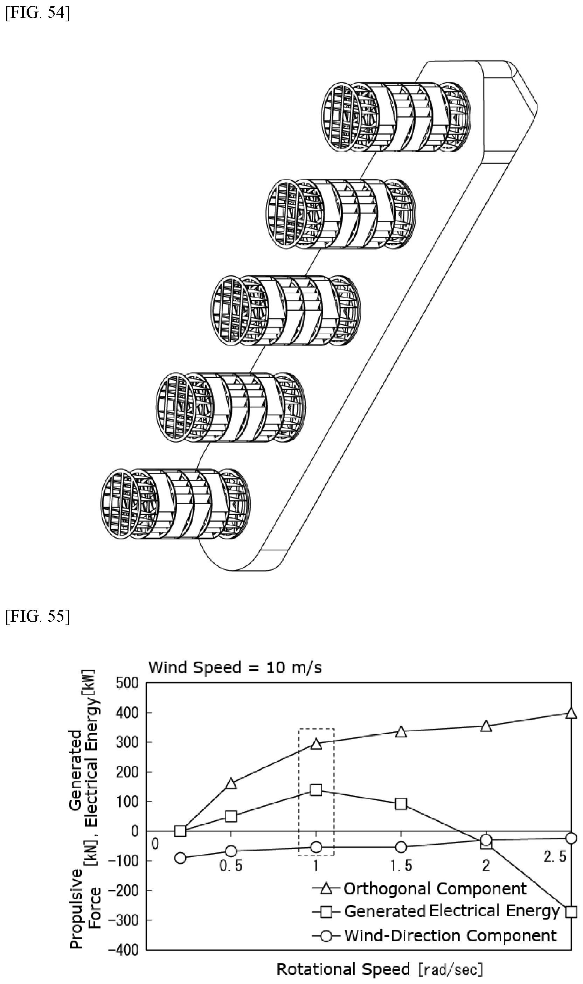

Fig. 54 shows a modification example of a wind power generation system.

Referring to Fig. 54, for example, five (an example of several) wind propulsion devices may be installed on the hull of a ship. For example, the electrical energy to be generated may be adjusted by changing the number of wind propulsion devices on the hull. For example, the manner (number and arrangement, etc.) of the wind propulsion devices installed on the hull can be modified according to the design specifications.

A simplified calculation of characteristics yields the following.

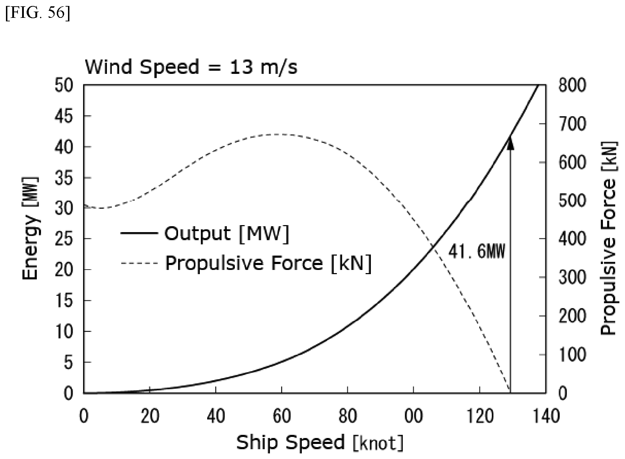

Fig. 55 shows an example of the relationship between rotational speed, propulsive force, and generated electrical energy for a wind speed of 10 m/s. Fig. 56 shows an example of the relationship between ship speed, energy, and propulsive force for a wind speed of 13 m/s. Figs. 55 and 56 illustrate a case in which hull resistance (water resistance) is neglected and the ship is moved to a speed at which aerodynamic equilibrium is achieved.

Referring to Fig. 55, the wind power generation system may be controlled such that it can proceed while maintaining the rotational speed within the region defined by the dashed line in Fig. 55 and generating power.

Referring to Fig. 56, when the wind speed is 13 m/s, a fixed wind turbine with a wind-receiving area of 1000 m2 generates 1.36 MW of wind energy, where the Betz limit is 0.81 MW. In contrast, the wind propulsion system of the present modification example generates 41.6 MW of wind energy, which is about 30 times more than the energy generated by the fixed wind turbine described above and can exceed the Betz limit described above.

<Other Applications>

If water resistance is to be ignored, railroads may be used. For example, the wind propulsion device may be installed on railroad vehicles running on underutilized local lines.

The rotor sail mechanism is not limited to wind and can be applied to other fluids. For example, electricity may be generated by moving a ship across ocean currents (ocean current power generation). Ocean currents are slower in speed, but they have a higher density compared to air. The Japan Current flows at approximately 2 meters per second, but considering that its density is about 1,000 times greater than that of air, it is equivalent to a wind blowing at 20 meters per second.

For ships, power transmission is challenging, and the capacity for onboard energy storage is inherently limited. Therefore, it is feasible to construct a factory that consumes a large amount of electricity within a ship (i.e., a factory ship). Examples include hydrogen production and electrolytic refining of aluminum. In this case, electrical power can be directly transported to the demand site by ship.

For example, the wind propulsion device may be installed on a railroad container. In this case, electrical power can be supplied to refrigerated containers and the like, and thus it is no longer necessary to provide electricity via pantographs. Furthermore, the refrigerated containers and the like can be electrically isolated from the railroad system, the risk of accidents can be reduced. It can also be used as a power source for the braking system of freight cars. Similarly, the wind propulsion device may be installed on truck containers or ship containers.

<Modification Examples>

The technical scope of the present invention is not limited to the embodiments described above but is susceptible of various modifications within the purport of the present invention.

The functions of the control unit according to the embodiments described above may be implemented in a program stored on a computer-readable storage medium, and the program stored on the storage medium may be loaded onto a computer system that then executes the program for processing.

The "computer system" mentioned above may include an operating system (OS) or hardware such as peripheral devices.

The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client.

The program mentioned above may be transmitted from a computer system that includes a storage device or the like storing the program to another computer system through a transmission medium or by a transmission wave in a transmission medium. The "transmission medium" for transmitting the program refers to a medium that operates to transmit information, like a network (communication network) such as the Internet or a communication line (communication wire) such as the telephone line.

Only a part of the functions described above may be implemented in the above program. Further, the functions described above may be implemented by a combination of the above program and other programs previously stored on the computer system. That is, the above program may be what is called a difference file (a difference program).

The elements of the embodiments described above may be replaced with known elements within the purport of the present invention. Further, the modifications described above may be combined.

The foregoing embodiments disclosed herein describe a plurality of physically separate constituent parts. They may be combined into a single part, and any one of them may be divided into a plurality of physically separate constituent parts. Irrespective of whether or not the components are integrated, they are acceptable as long as they are configured to attain the object of the invention.

According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrated or distributed, they are acceptable as long as they are configured to attain the object of the invention.

REFERENCE SIGNS LIST

1...wind propulsion device
2...ship (movable body)
4...assembly
7...detection unit (second obtaining unit)
10A to 10H...blade
20A, 20B...rotating plate (rotor)
40...rotation control unit
41...electric motor
100...wind propulsion system
126...calculation unit
140...rotor sail controller (wind power controller)
201 ...wind propulsion device
204A-204C...assembly
220A-220D...rotating plate (rotor)
301...wind propulsion device
304A-304F...assembly
305A, 305B...unit
401...wind propulsion device
501...wind propulsion device
504...assembly
530...shaft portion
531, 531A... cover
532...drive unit
CL1, CL2...center line
FL1...first virtual straight line (virtual straight line)
FL2...second virtual straight line (virtual straight line)

**Claims**

1. A wind propulsion device installed on a movable body and configured to generate propulsive force by receiving wind, the wind propulsion device comprising one or more assemblies, the one or more assemblies each including:

    a rotor configured to rotate about a rotation axis extending in a predetermined direction; and
    a plurality of plate-shaped blades fixedly attached to the rotor,
    wherein the plurality of blades are disposed such that virtual straight lines connecting respective opposite ends of the plurality of blades are parallel to each other.

2. The wind propulsion device of claim 1, wherein the plurality of blades are disposed such that the respective opposite ends are located on a virtual circle centered on the rotation axis.

3. The wind propulsion device of claim 1 or 2, wherein the plurality of blades are disposed such that, as viewed from the predetermined direction, the plurality of blades are line symmetrical with respect to a center line that passes through a center of rotation of the rotation axis and that is parallel to the virtual straight lines.

4. The wind propulsion device of claim 1 or 2, wherein the plurality of blades are disposed such that, as viewed from the predetermined direction, the plurality of blades are line symmetrical with respect to a center line that passes through a center of rotation of the rotation axis and that is orthogonal to the virtual straight lines.

5. The wind propulsion device of claim 1 or 2, wherein a longest one of the plurality of blades is sized such that a length of the virtual straight line is equal to or greater than half a diameter of a virtual circle centered on the rotation axis.

6. The wind propulsion device of claim 1 or 2,

    wherein the rotor is a plate-shaped rotating plate, and
    wherein the plurality of blades are fixedly attached to one face of the rotating plate.

7. The wind propulsion device of claim 6,

    wherein the one or more assemblies include a plurality of assemblies arranged next to each other in a direction along the rotation axis, and
    wherein, if the wind propulsion device includes N assemblies and M is a natural number, the plurality of assemblies are offset from one another by 180 x M/N degrees.

8. The wind propulsion device of claim 7, comprising

    two units, each unit including the plurality of assemblies offset from one another by 180 x M/N degrees,
    wherein the two units are stacked such that the plurality of assemblies in one of the two units are stacked in a reverse order relative to the plurality of assemblies in another one of the two units in the predetermined direction.

9. The wind propulsion device of claim 1 or 2, further comprising:

    a shaft portion extending along the rotation axis, the shaft portion being provided on the one or more assemblies;
    a cover connected to the shaft portion, the cover being configured to move upward and downward; and
    a drive unit configured to cause the cover to move to a non-operating position where the cover encloses the one or more assemblies and an operating position where the cover does not enclose the one or more assemblies.

10. The wind propulsion device of claim 9, wherein the cover rotates integrally with the one or more assemblies.

11. The wind propulsion device of claim 1 or 2, wherein the plurality of blades are twisted such that first virtual straight lines connecting respective opposite ends of the plurality of blades at a first position on the rotation axis intersect, as seen from the predetermined direction, second virtual straight lines connecting the respective opposite ends of the plurality of blades at a second position different from the first position on the rotation axis.

12. A wind propulsion system comprising a wind propulsion device and a wind power controller, the wind propulsion device being installed on a movable body and being configured to generate propulsive force by receiving wind, the wind power controller being configured to control the wind propulsion device, wherein the wind propulsion system comprises:

    an assembly including a plurality of plate-shaped blades, the plurality of blades being connected such that the plurality of blades are integrally rotatable around a rotation axis extending in a predetermined direction; and
    an electric motor configured to drive the rotary shaft,
    wherein the wind power controller includes:

        a first obtaining unit configured to obtain a moving speed of the movable body;
        a second obtaining unit configured to obtain wind condition information including a current wind speed and a current wind direction in an area where the movable body is located;
        a calculation unit configured to calculate a relative wind direction relative to the wind propulsion device, based on the obtained moving speed of the movable body and the obtained wind condition information; and

a rotation control unit configured to control the electric motor in accordance with the calculated relative wind direction to adjust a rotation speed of the assembly.

13. The wind propulsion system of claim 12, wherein the rotation control unit adjusts the propulsive force.

14. The wind propulsion system of claim 13, wherein induced drag is adjusted by adjusting the propulsive force.

15. The wind propulsion system of claim 13 or 14, wherein electrical power is generated simultaneously with adjusting the propulsive force.

[FIG. 1]

[FIG. 2]

[FIG. 3]

[FIG. 4]

[FIG. 5]

[FIG. 6]

[FIG. 7]

[FIG. 8]

| Conventional Rigid-Wing Sail | Rotor Sail Ship |

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

[FIG. 20]

[FIG. 21]

[FIG. 22]

[FIG. 23]

[FIG. 24]

[FIG. 25]

[FIG. 26]

[FIG. 27]

[FIG. 28]

[FIG. 29]

[FIG. 30]

[FIG. 31]

[FIG. 32]

[FIG. 33]

[FIG. 34]

[FIG. 35]

[FIG. 36]

[FIG. 37]

[FIG. 38]

531

504

3

[FIG. 39]

[FIG. 40]

[FIG. 41]

504

531A

3

[FIG. 42]

[FIG. 43]

[FIG. 44]

[FIG. 45]

[FIG. 46]

[FIG. 47]

[FIG. 48]

[FIG. 49]

[FIG. 50]

[FIG. 51]

[FIG. 52]

[FIG. 53]

EP 4 775 833 A1

(1)

Blade Rotation

Natural Wind

Relative Wind

Lift

Rotation Component

Rotation Component

Lift

Blade Rotation

Relative Wind

Natural Wind

Natural Wind

(2) Rotation of rotor sail creates speed difference in front and behind it. According to Bernoulli's theorem, propulsive force is generated due to pressure difference.

(4) Natural wind changes to effective wind and becomes stronger, thereby increasing the rotational speed. This increases propulsive force and further increases effective wind speed.

Effective Wind

Ship Speed

Natural Wind

(3) Propulsive force increases ship's speed and effective wind speed.

[FIG. 54]

[FIG. 55]

Wind Speed = 10 m/s

- Orthogonal Component
- Generated Electrical Energy
- Wind-Direction Component

[FIG. 56]

## INTERNATIONAL SEARCH REPORT

| International application No. |
| --- |
| **PCT/JP2024/020769** |

| A. | CLASSIFICATION OF SUBJECT MATTER |
| --- | --- |

*F03D 9/32*(2016.01)i; *F03D 3/02*(2006.01)i
FI:   F03D9/32; F03D3/02

According to International Patent Classification (IPC) or to both national classification and IPC

| B. | FIELDS SEARCHED |
| --- | --- |

Minimum documentation searched (classification system followed by classification symbols)

F03D9/32; F03D3/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101684778 A (LI, Shanchang) 31 March 2010 (2010-03-31)<br>    p. 4, lines 12-14 | 1, 6-11 |
| Y | | 12-15 |
| A | | 2-5 |
| Y | JP 2008-215208 A (MAZDA MOTOR CORPORATION) 18 September 2008 (2008-09-18)<br>    paragraph [0052] | 12-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/020769**

| Patent document cited in search report | | | Publication date (day/month/year) | Patent family member(s) | Publication date (day/month/year) |
|---|---|---|---|---|---|
| CN | 101684778 | A | 31 March 2010 | (Family: none) | |
| JP | 2008-215208 | A | 18 September 2008 | (Family: none) | |

Form PCT/ISA/210 (patent family annex) (July 2022)

**EP 4 775 833 A1**

## REFERENCES CITED IN THE DESCRIPTION

**Patent documents cited in the description**

- JP 2023146366 A

- JP HEI6199287 B